# EUROPÄISCHE PATENTSCHRIFT

(11) **EP 0 912 990 B1**
(45) Veröffentlichungstag und Bekanntmachung des Hinweises auf die Patenterteilung: **04.06.2003**
(21) Anmeldenummer: 98925417.2
(22) Anmeldetag: 20.03.1998
(51) Int. Cl.: H01J 61/00, H01J 65/00

(54) **GASENTLADUNGSLAMPE MIT DIELEKTRISCH BEHINDERTEN ELEKTRODEN**
GAS DISCHARGE LAMP WITH DIELECTRICALLY IMPEDED ELECTRODES
LAMPE A DECHARGE DOTEE D'ELECTRODES INHIBEES DIELECTRIQUEMENT

(30) Priorität: 21.03.1997 DE 19711890; 21.03.1997 DE 19711892; 08.07.1997 DE 19729181
(43) Veröffentlichungstag der Anmeldung: 06.05.1999
(73) Patentinhaber: Patent-Treuhand-Gesellschaft für elektrische Glühlampen mbH, 81543 München (DE); Vollkommer, Frank, Dr., 82131 Buchendorf (DE); Hitzschke, Lothar, Dr., 81737 München (DE)
(72) Erfinder: VOLLKOMMER, Frank, D-82131 Buchendorf (DE); HITZSCHKE, Lothar, D-81737 München (DE); MÜCKE, Jens, D-82343 Pöcking (DE); SIEBAUER, Rolf, D-83620 Feldkirchen-Westerham (DE); JEREBIC, Simon, D-81737 München (DE)
(86) Internationale Anmeldenummer: DE9800826
(87) Internationale Veröffentlichungsnummer: WO98043276

(56) Entgegenhaltungen:
- EP-A- 0 363 832
- EP-A- 0 541 394
- WO-A-87/04562
- DE-A- 19 526 211
- FR-A- 2 668 634
- US-A- 4 625 148
- US-A- 5 592 047
- PATENT ABSTRACTS OF JAPAN vol. 097, no. 006, 30. Juni 1997 & JP 09 050787 A (TOSHIBA LIGHTING &TECHNOL CORP; NORITAKE CO LTD), 18. Februar 1997

## Beschreibung

### Technisches Gebiet

Die Erfindung betrifft eine Gasentladungslampe nach dem Oberbegriff des Anspruchs 1. Diese Gasentladungslampe hat ein eine Gasfüllung einschließendes Entladungsgefäß, wobei zumindest Teile des Entladungsgefäßes für Strahlung eines gewünschten Spektralbereiches transparent sind. Eine Anzahl Anoden und Kathoden erzeugt bei geeigneter elektrischer Versorgung eine Entladung in der Gasfüllung, die entweder die gewünschte Strahlung direkt erzeugt oder mit der durch die Entladung emittierten Strahlung einen Leuchtstoff in der Gasentladungslampe anregt, der die gewünschte Strahlung emittiert.

Im vorliegenden Fall wird eine Gasentladungslampe für die sogenannte dielektrisch behinderte Entladung betrachtet, bei der zumindest die Anoden, evtl. auch die Kathoden, durch eine dielektrische Zwischenschicht von der Gasfüllung getrennt sind. Weiterhin geht die Erfindung aus von Anodenund Kathodengeometrien, die im wesentlichen parallel zueinander verlaufende Streifen aufweisen, wobei der Begriff streifenförmig nicht notwendigerweise parallel zueinander verlaufende Kanten impliziert. Mit Streifen sind hier längliche, im Vergleich zu ihrer Länge dünne und schmale Gebilde gemeint. Diese Streifen können auch bestimmte Strukturen entlang ihrer Länge haben, wie weiter unten noch ausgeführt, und müssen nicht gerade sein.

Die Begriffe Anoden und Kathoden sind streng genommen nur im unipolaren Betrieb der Gasentladungslampe sinnvoll. Ein bipolarer Betrieb ist aber hier nicht ausgeschlossen, wobei sich dann der Unterschied zwischen Anoden und Kathoden verwischt und die Elektroden grundsätzlich mit einer dielektrischen Schicht von der Gasfüllung getrennt sein müssen. Dementsprechend schließen die Begriffe "Anode" und "Kathode" in den Ansprüchen und im folgenden auch Elektroden für bipolare Entladungen ein, die jeweils zeitweilig die Rolle einer Anode oder Kathode spielen.

Ferner ist noch klarzustellen, daß die dielektrische Schicht keine speziell zu diesem Zweck auf eine Elektrode aufgebrachte Schicht sein muß, sondern beispielsweise auch durch eine Entladungsgefäßwand gebildet sein kann, wenn Elektroden auf der Außenseite einer solchen Wand oder innerhalb der Wand angeordnet sind.

### Stand der Technik

Zum Stand der Technik werden folgende Dokumente genannt:

Die EP 0 363 832 zeigt einen UV-Hochleistungsstrahler mit paarweise hochspannungsversorgten länglichen Elektroden, die durch dielektrisches Material von einer Gasfüllung getrennt sind. Die Anoden und Kathoden sind in alternierender Reihenfolge nebeneinander angeordnet, so daß sich in relativ flachen Entladungsgefäßen eine insgesamt flächenartige Konfiguration von Einzelentladungen ergibt.

Ein Betriebsverfahren für eine solche Entladungslampe ergibt sich aus der WO 94/23442. Dabei sind bestimmte Folgen von Pulsen der Leistungsversorgung speziell auf die dielektrisch behinderte Entladung abgestimmt und bilden insgesamt typische deltaförmige Entladungen zwischen den Anoden und Kathoden. In einer Gasentladungslampe existiert eine größere Zahl solcher Einzelentladungen, die entlang den streifenförmigen Elektroden aufgereiht sind und im Fall einer geeignet ausgelegten Puls-Betriebsweise mit sehr hoher Effizienz die gewünschte Strahlung erzeugen.

Eine entsprechende Schaltungsanordnung zeigt die DE 195 48 003 A1.

In der DE-OS 195 26 211.5 und der WO 94/04625 ist beschrieben, wie das obenstehende Verfahren auf den davor beschriebenen UV-Hochieistungsstrahier angewendet werden kann.

Weiterhin zeigt die EP 0 607 453 eine Flüssigkristallanzeige mit einer Flächenbeleuchtungsvorrichtung aus einem plattenförmigen Lichtleiter und einer stabförmigen Leuchtstofflampe. Die Leuchtstofflampe ist dabei so gebogen, daß sie an zwei oder mehr aneinander grenzenden Kanten der Lichtleiterplatte angeordnet werden kann. Das Licht aus der Leuchtstofflampe kann dadurch in die Lichtleiterplatte eingekoppelt werden, und zwar an zumindest zwei Kanten, und durch die Plattenoberfläche zu der Flüssigkristallanzeige hin gestreut werden. Durch Verwendung möglichst nur einer Leuchtstofflampe soll dadurch die Gleichmäßigkeit der Ausleuchtung verbessert werden.

### Darstellung der Erfindung

Der hier vorliegenden Erfindung liegt das technische Problem zugrunde, die eingangs beschriebene Gasentladungslampe nach dem Oberbegriff des Anspruchs 1 weiterzuentwickeln. Dabei zielt die Erfindung auch auf ein Herstellungsverfahren für diese Gasentladungslampe sowie auf ein Beleuchtungssystem mit dieser Gasentladungslampe und einer elektrischen Versorgung sowie auf Bildschirmsysteme, in denen die erfindungsgemäße Lampe mit einem Bildschirm kombiniert ist.

Insgesamt ergibt sich als Lösung des technischen Problems zunächst eine Gasentladungslampe mit einem zumindest teilweise transparenten und mit einer Gasfüllung gefüllten Entladungsgefäß, einer Anzahl im wesentlichen streifenförmiger Anoden und Kathoden, die auf Wandungen des Entladungsgefäßes und im wesentlichen parallel zueinander verlaufen, und einer dielektrischen Schicht zwischen zumindest den Anoden und der Gasfüllung für eine dielektrisch behinderte Entladung in dem Entladungsgefäß zwischen benachbarten Anoden und Kathoden, wobei zumindest ein Anodenpaar zwischen zwei jeweils einer Anode des Paares benachbarten Kathoden angeordnet ist.

Ferner umfaßt die Erfindung das Herstellungsverfahren nach Anspruch 20, das Beleuchtungssystem nach Anspruch 21 und das Flachbildschirmsystem nach Anspruch 22 sowie die jeweiligen Ausgestaltungen in den abhängigen Ansprüchen.

Der Vorteil des Anodenpaares zwischen benachbarten Kathoden liegt vor allem darin, daß jeweils einer der Kathoden nur eine der beiden Anoden des Paares als nächster Anodennachbar zugeordnet ist. Dadurch können sich keine Situationen ergeben, in denen von einer Anode ausgehend zwei äquivalente Nächst-Nachbarkathoden vorliegen. Es hat sich nämlich herausgestellt, daß in diesem Fall in nicht genau vorhersehbarer Weise Einzelentladungen zwischen der Anode und einer der beiden in Frage kommenden Kathoden entstehen. Diese Auswahl einer der beiden Seiten ist häufig über die gesamte Streifenlänge der Elektroden nicht einheitlich, und kann auch zeitlich wechseln. Damit ist mit den konventionellen Elektrodengeometrien keine weitgehende räumliche und zeitliche Homogenisierung der Entladungsverteilung und damit keine wirklich genaue Steuerung der Leuchtdichteverteilung in der Lampe möglich.

Als zusätzlicher Aspekt können mit der Erfindung auch "dichtere Packungen" von Einzelentladungsstrukturen erzeugt werden, womit sich eine verbesserte Leistungsdichte ergibt.

Im Fall eines bipolaren Betriebs sind dabei die Begriffe Anoden und Kathoden jeweils auf Elektroden einer Polarität der elektrischen Versorgung zu beziehen. Durch die Austauschbarkeit der Polaritäten im bipolaren Fall ergibt sich, daß jedenfalls bei wiederholten Elektrodenstreifen-Anordnungen die Elektroden beider Polarität bevorzugt paarweise anzuordnen sind.

Sowohl für den unipolaren als auch für den bipolaren Fall gilt jedoch, daß die paarweise Anordnung von Elektroden nicht für die gesamte Gasentladungslampe realisiert sein muß, sondern z. B. in Randbereichen entfallen kann. Ferner ist zu beachten, daß schon bei der erfindungsgemäßen alternierenden Anordnung von Paaren aus Elektroden gleicher Polarität mit paarweise wechselnder Polarität jeweils Elektrodenpaare existieren, zwischen denen kein Elektrodenpaar der anderen Polarität angeordnet ist (nämlich gar keine Elektrode).

Neben der besseren Eignung für den bipolaren Betrieb kann es ein weiterer Vorteil einer paarweisen Anordnung auch der Kathoden sein, daß die typischen deltaförmigen Entladungsstrukturen mit einer Spitze auf den Kathoden stehen und die Auftrennung der Kathode die Konzentration zweier Entladungsspitzen an derselben Stelle derselben Kathode vermeidet. Damit können in bestimmten Anwendungsfällen mögliche thermische Probleme oder Stabilitätsprobleme vermieden werden.

Bevorzugt richtet sich die Erfindung auf Gasentladungslampen mit einem Entladungsgefäß aus elektrisch nichtleitendem Material und in einer Flachstrahlergeometrie. Gerade bei flachen Entladungsgefäßgeometrien spielen die von der Erfindung erzielten Vorteile einer Steigerung der erreichbaren Leistungsdichte und einer Verbesserung der Homogenität eine Rolle.

In anderen Worten betrifft die Erfindung insbesondere einen Flachstrahler mit einem zumindest teilweise transparenten und mit einer Gasfüllung gefüllten geschlossenen oder von einem Gas oder Gasgemisch durchströmten offenen Entladungsgefäß aus elektrisch nichtleitendem Material und mit auf der Wandung des Entladungsgefäßes angeordneten länglichen Elektroden, wobei Kathoden und Anoden wechselweise nebeneinander angeordnet sind und wobei zumindest die Anoden durch ein dielektrisches Material vom Inneren des Entladungsgefäßes getrennt sind, dadurch gekennzeichnet, daß zwischen benachbarten Kathoden jeweils eine zusätzliche Anode angeordnet ist, d. h. daß zwischen den Nachbarkathoden jeweils ein Anodenpaar angeordnet ist.

Zugunsten der Steigerung der Leistungsdichte in der Gasentladungslampe können die gegenseitigen Abstände zwischen den Elektroden eines Paares kleiner als die jeweiligen Abstände zu den Nachbarn anderer Polarität sein. Ein bevorzugter Bereich für den gegenseitigen Abstand der Elektroden eines Paares liegt dabei zwischen der Hälfte und dem doppelten Wert der einzelnen Elektrodenbreite.

Es kann jedoch auch Anwendungen geben, bei denen die Lampe mit niedriger Leistung betrieben werden soll. Dann kann es gerade vorteilhaft sein, den gegenseitigen Abstand der Elektroden eines Paares größer als den jeweiligen Abstand zu den Nachbarn anderer Polarität zu wählen. Eine sinnvolle Definition für den Abstand der Elektroden eines Paares bezieht sich auf die Schlagweite der Entladung. Über die Schlagweite ausgedrückt liegt der Elektrodenabstand in dem Paar bevorzugterweise unter 200 % der Schlagweite. Eine günstige Untergrenze für den Elektrodenabstand in dem Paar - auch bei Anwendungen, bei denen die Leistungsdichte gesteigert werden soll, liegt bei 10 % der Schlagweite. Weiter bevorzugte Untergrenzen sind 20 % und 40 % der Schlagweite und bevorzugte Obergrenzen sind 100 % und 70 % der Schlagweite.

Bei einer bevorzugten Variante der Erfindung ist zumindest ein Elektrodentyp auf einer Entladungsgefäßinnenwand angeordnet, bevorzugterweise alle Elektroden. Im Gegensatz zu dem Fall, in dem die dielektrische Schicht durch eine Entladungsgefäßwand gebildet ist, können nun die Eigenschaften der damit gesondert aufzubringenden dielektrischen Schicht, insbesondere ihre Dicke als Parameter für die Zünd- und die Brennspannung der Entladung, ausschließlich unter Aspekten der Entladung optimiert werden. Im anderen Fall spielen vor allem mechanische Gesichtspunkte eine wesentliche Rolle.

Mit stromtragenden Bauelementen innerhalb eines Entladungsgefäßes oder eines geschlossenen Lampenkolbens ist jedoch grundsätzlich das Problem gasdichter Stromdurchführungen verbunden. Die erforderlichen Arbeitsschritte sind wegen der notwendigen Dichtheit der Durchführungen im allgemeinen kompliziert und jedenfalls zusätzlich zu den übrigen Fertigungsschritten erforderlich. Die Erfindung sieht nun vor, die Streifenform der Elektroden selbst quasi als Durchführung zu verwenden oder, anders ausgedrückt, ganz auf separate Durchführungen zu verzichten und die Elektroden als Verlängerung durch das Entladungsgefäß hindurch zu führen.

Dies bietet sich insbesondere bei flachen Entladungsgefäßen oder Entladungsgefäßen mit zumindest einer flachen Platte an, bei denen die Elektroden auf der Platte, nämlich der Entladungsgefäßinnenwand, aufgebracht sind. Die Elektrodenstruktur ist dabei so, daß durch ein einheitliches Herstellungsverfahren der Abscheidung oder des Aufbringens der Elektroden auf die Platte sowohl die eigentlichen entladungsgefäßinternen Elektrodenabschnitte als auch die Durchführungsabschnitte und eventuelle äußere Anschlußabschnitte hergestellt sind. Die Begriffe flache Entladungsgefäße, Flachstrahler oder flache Platten sind in dieser Anmeldung nicht auf gerade flache Geometrien eingeschränkt, sondern beinhalten auch gewölbte flache Formen.

Im Falle eines aus zwei Platten und einem diese verbindenden Außenrahmen aufgebauten Entladungsgefäßes für einen Flachstrahler wird dazu z. B. einfach der Rahmen auf die auf einer Platte aufgebrachten Elektroden aufgesetzt und gasdicht damit verbunden, wobei die flachen Elektrodenstreifen nicht störend ins Gewicht fallen. Damit vereinfacht sich nicht nur die Herstellung hinsichtlich des Wegfalls der speziellen Herstellungsschritte für konventionelle gasdichte Stromdurchführungen (durch die Platte oder durch den Rahmen).

Es ist ferner möglich, die Elektrodengeometrie innerhalb des Entladungsgefäßes völlig auf die Optimierung der Entladungsgeometrie abzustimmen und beispielsweise auf ein Zusammenführen der Elektroden zu einer gemeinsamen konventionellen Stromdurchführung zu verzichten. Mit der erfindungsgemäßen Lösung können die Elektroden vielmehr auch jeweils für sich oder in kleineren Untergruppen durchgeführt werden.

Hier wird vorsorglich festgestellt, daß sich die Anmelderin eine Schutzbeanspruchung für die Merkmale des Anspruchs 4 gegebenenfalls in Verbindung mit Merkmalen darauf zurückbezogener abhängiger Ansprüche in Verbindung mit den Merkmalen des Oberbegriffs in Anspruch 1, jedoch ohne das kennzeichnende Merkmal des Anspruchs 1, vorbehält.

Eine bevorzugte Ausgestaltung der erfindungsgemäß vereinfachten Durchführungen geht davon aus, daß das Entladungsgefäß zumindest eine Platte aufweist. Es muß sich deswegen nicht unbedingt um einen Flachstrahler handeln, der insgesamt im wesentlichen plattenförmig ist, sondern die der Platte gegenüberliegende Seite des Entladungsgefäßes kann auch eine andere Form aufweisen. In jedem Fall bietet sich die Platte des Entladungsgefäßes dazu an, die Elektroden so darauf anzuordnen, daß sie auf der Platte verlaufend durch die Grenze des Entladungsgefäßes durchgeführt sind. Dies kann z. B. dadurch geschehen, daß die Elektroden auf die Platte aufgedruckt werden und dann die Platte mit dem Rest des Entladungsgefäßes zusammenmontiert wird, etwa durch eine Glaslotschicht.

Eine technische Schwierigkeit bei der erfindungsgemäßen Durchführung der Elektrodenstreifen auf der Platte durch eine Entladungsgefäßgrenze kann darin bestehen, Unterbrechungen der Elektrodenleiterbahnen durch thermische oder mechanische Belastung möglichst zu vermeiden. Ein solcher Bruch führt zum Ausfall einer Elektrode oder einer Elektrodengruppe und verschlechtert damit zumindest die Gleichmäßigkeit der Strahlungserzeugung. Besonders kritisch ist dies bei einer weiter unten behandelten bevorzugten Ausführung der Erfindung als flache Hinterleuchtungslampe für Bildschirme und ähnliches. Bei solchen und vergleichbaren Anwendungen sinc[ sind Elektrodenausfälle auch bei großer Elektrodenzahl nicht tolerabel.

Erfindungsgemäß ist dazu vorgesehen, daß bei einem im wesentlichen rechteckigen Querschnitt der Anoden und/oder Kathoden die Dicke der Streifenform, also die Höhe des angenommenen Rechtecks senkrecht zur Platte, im Bereich von 3-50 µm und vorzugsweise über 5 bzw. 8 µm liegt. Dabei sind Streifenbreiten von 0,3-1,5 mm vorzugsweise von 0,5 bis 1,2 mm vorteilhaft.

Die untere Grenze der Streifendicke ist dadurch bedingt, daß bei zu geringen Dicken keine ausreichende Stromtragfähigkeit erzielt werden kann, so daß der elektrische Widerstand der Elektroden zu hoch wird oder die thermische Belastung durch die Joulesche Verlustwärme von Strömen (eventuell punktuell) zu groß wird und damit zu Materialbrüchen führen kann. Der letzte Gesichtspunkt gilt insbesondere auch für die Stellen, in denen zusätzlich eine thermische Belastung durch eine in der Umgebung brennende Entladungsstruktur oder Entladungsspitze auftritt.

Andererseits sollte die Schichtdicke bevorzugterweise nicht über dem angegebenen Wert liegen, weil die Dehnungsgrenze der Streifen in etwa proportional zur reziproken Wurzel der Streifendicke anzusetzen ist. Zu dicke Elektrodenstreifen führen damit schon bei kleinen mechanischen oder thermischen Belastungen zu Brüchen. Es hat sich im übrigen herausgestellt, daß die angegebenen Werte in guter Näherung für verschiedene in Frage kommende Materialien (z. B. für Gold, Silber, Aluminium, Kupfer) gelten.

Die angegebenen Streifenbreiten gehen davon aus, daß zur Verhinderung ungünstiger Raumladungseffekte gewisse Breiten der Elektroden notwendig sind. Die angegebenen Dickenwerte sind also insbesondere in Zusammenhang mit den Breiten der Streifen zu verstehen. Die hier angenommene rechteckige Querschnittsform stellt natürlich in vielen Fällen nur eine grobe Näherung dar und dient hier gewissermaßen nur als Modell zur Definition der Begriffe Breite und Dicke. Andere Formen sind natürlich in Zusammenhang mit den hier gegebenen Abmessungen auch möglich, solange die Begriffe Breite und Dicke sinnvoll definiert werden können.

Im Sinn der Erfindung können natürlich sowohl die Anoden als auch die Kathoden auf der Innenwand oder auch auf verschiedenen Innenwänden aufgebracht sein und in der beschriebenen Weise in der Verlängerung ihrer Streifenform durchgeführt sein.

Es wurde bereits darauf hingewiesen, daß diese herstellungstechnisch besonders unproblematische Form der Durchführung der Streifen den Vorteil hat, daß die Einzelelektroden nicht unbedingt innerhalb des Entladungsgefäßes zu einem einzigen Anschluß einer Anodendurchführung bzw. Kathodendurchführung zusammengeführt werden müssen. Es sind nämlich ohne weiteres auch viele Durchführungen von Einzelelektroden oder Elektrodengruppen möglich, die dann erst außerhalb des Entladungsgefäßes zusammengeführt sind. Insbesondere ist es vorteilhaft, allen Einzelelektroden außerhalb des Entladungsgefäßes einem gemeinsamen Stromzuführungsbus zuzuordnen.

Ein weiterer erfindungsgemäßer Gesichtspunkt zu der Streifenform der Elektroden besteht darin, daß die Breite eines Anodenstreifens nicht konstant ist, sondern in einem Randbereich breiter als in einem Mittenbereich des Entladungsgefäßes ist. Dadurch kann die Leuchtdichte innerhalb der Gesamtanordnung der Elektroden variiert werden, weil die elektrische Stromdichte der Entladungen mit der Verbreiterung zunimmt.

Dabei ist es bevorzugt, die Verbreiterung so auszuführen, daß sie sich hauptsächlich zu der jeweils anderen Anode des Anodenpaares hin erstreckt. Dies hat den Vorteil eines wenig oder nicht veränderten Abstandes zwischen den Anoden und Kathoden, so daß die Zündbedingungen entlang den Elektrodenstreifen im wesentlichen konstant bleiben. Bei ausgeprägten Inhomogenitäten der Zündbedingungen besteht sonst die Gefahr, daß sich nicht entlang der gesamten Elektrodenlängen auch Entladungsstrukturen bilden. Insgesamt wird angestrebt, die Leuchtdichte der fertigen Lampe gezielt zu steuern, etwa zu homogenisieren oder auch auf eventuell inhomogene Transmissionseigenschaften beispielsweise eines Flachbildschirms abzustimmen. Randverdunkelungen kann damit entgegengewirkt werden. Auch Abdunkelungen durch weiter unten beschriebene Abstandshalter können dementsprechend verringert werden, und zwar insbesondere im Zusammenwirken mit einem diffusen optischen Element auf der Lichtaustrittsseite der Gasentladungslampe. Dazu müssen die Verbreiterungen in der Umgebung der Abstandshalter liegen.

Wenn die Ausbeute der Gasentladungslampe ein entscheidender Faktor ist, hat sich eine Anordnung als vorteilhaft herausgestellt, bei der die Anoden und die Kathoden nicht auf derselben Innenwand des Entladungsgefäßes angeordnet sind. Dies betrifft insbesondere den Fall von Flachstrahlern/ bei denen zwei gegenüberliegende Innenwände von Entladungsgefäßplatten vorliegen. Wenn dann die Anoden auf der einen Platte und die Kathoden auf der anderen Platte angeordnet sind, werden die Anodenstreifen und Kathodenstreifen vorteilhafterweise in der Projektion auf eine plattenparallele Ebene so gegeneinander versetzt, daß sich insgesamt bei einer gedachten Linienverbindung zwischen jeweils nächst-benachbarten Anoden und Kathoden in Streifenrichtung gesehen im wesentlichen symmetrische V-Strukturen ergeben.

Dadurch brennen die Entladungen also von der einen Platte des Entladungsgefäßes durch den Entladungsraum zu der anderen Platte. Durch die versetzte Anordnung ist die Schlagweite größer als der Plattenabstand. Diese Geometrie zeigt hohe Ausbeuten, was vermutlich auf eine Verringerung der Wand- und Elektrodenverluste zurückzuführen ist. Da im unipolaren Fall die Anodenstreifen häufig schmäler als die Kathodenstreifen ausgebildet sind, werden häufig bevorzugt die Anodenstreifen auf eine Lichttransmissionsseite gelegt, um die Abschattung zu minimieren, Durch die Verdopplung der Anoden kann aber auch der umgekehrte Fall vorteilhaft sein.

Es wurde eingangs bereits festgestellt, daß die Streifenformen bestimmte Strukturen entlang ihrer Länge aufweisen können. Ein bevorzugtes Beispiel dazu sind in der Längsrichtung der Kathodenstreifen relativ kurze Vorsprünge zur örtlichen Festlegung einer Einzelentladungsstruktur. Durch den Vorsprung wird lokalisiert der Abstand zur nächsten Anode etwas verkürzt, so daß sich eine Entladungsstruktur mit ihrer Spitze auf den Vorsprung setzt. Bei ausreichender Leistungseinkopplung sitzen dann auf allen Vorsprüngen einzelne Entladungsstrukturen.

Mit dieser Maßnahme kann die Flächenverteilung der Entladungsstrukturen zugunsten einer verbesserten Homogenisierung oder zugunsten einer Steuerung der Leuchtdichtenverteilung beeinflußt werden. Es können auch Verschiebungen durch thermische Konvektion oder zeitliche Fluktuationen durch eine örtliche instabile Ladungsstrukturverteilung vermieden werden.

Insbesondere ist es möglich, die Vorsprünge in einem Randbereich des Entladungsvolumens dichter anzuordnen als in einem Mittenbereich, womit eine vergleichbare Wirkung erzielt wird, wie mit der bereits beschriebenen Verbreiterung der Anodenstreifen.

Ein weiterer Aspekt der Erfindung betrifft Abstandshalter zwischen zwei Platten eines Entladungsgefäßes für einen Flachstrahler, sowie die geometrische Anordnung der Abstandshalter. Bei Flachstrahlerentladungsgefäßen sind zwei Platten, eine Boden- und eine Deckenplatte, in relativ geringem Abstand im Vergleich zu ihrer Längen- oder Breitenausdehnung im wesentlichen parallel zueinander vorgesehen. Um über die gesamte Fläche der Platten einen möglichst genauen Abstand der Platten voneinander sicherzustellen und/oder um das gesamte Flachstrahler-Entladungsgefäß mechanisch fester zu machen, können zwischen den Platten Abstandshalter vorgesehen sein, die jeweils mit der Bodenplatte und mit der Deckenplatte fest verbunden werden können. Jedoch auch ohne solche Befestigungen wirken die Abstandshalter stabilitätsverbessernd.

Solche Abstandshalter sind im Hinblick auf eine möglichst große mechanische Festigkeit des Entladungsgefäßes besonders vorteilhaft, und auch im Hinblick auf die zuvor dargestellte erfindungsgemäße Form der Stromdurchführungen von Bedeutung. Je kleiner die Wahrscheinlichkeit und die Größe von Biegebewegungen des Entladungsgefäßes bei der Herstellung und dem Betrieb ist, um so geringer ist die mechanische Beanspruchung der Elektrodenstreifen und zwar insbesondere im Durchführungsbereich. Zugunsten der mechanischen Stabilität sollten die Abstandshalter dabei möglichst dicht angeordnet sein.

Andererseits ist jeder zusätzliche Abstandshalter grundsätzlich mit einer Erhöhung der Verluste bei der Lichterzeugung verbunden. Das betrifft zum einen zusätzliche Wandverluste der Entladung selbst durch die zusätzlichen Randflächen des Abstandshalters und andererseits die nie ganz zu vermeidende Lichtabsorption und die zusätzliche Streuung.

Demgemäß sieht die Erfindung bevorzugte Bereiche für den gegenseitigen Abstand von Abstandshaltern vor, die im Nächst-Nachbarverhältnis zueinander stehen. Dabei sind zwei Größen sinnvoll, die jeweils eine Beziehung zu der Geometrie des Flachstrahler-Entladungsgefäßes herstellen.

Zunächst ist die mechanische Belastbarkeit der Elektrodenstreifen abhängig von ihrer Dicke. Je dicker die Elektrodenstreifen sind, um so starrer sollte das Entladungsgefäß sein. Dementsprechend ist das Produkt aus der Elektrodendicke - bei abweichenden Dicken der dünnsten - mit dem Nächst-Nachbarabstand der Abstandshalter eine sinnvolle Bezugsgröße und liegt vorteilhafterweise in dem Bereich von 5 x 10⁻⁸ m² - 6,8 x 10⁻⁷ m²; eine bevorzugte Untergrenze ist 10⁻⁷m² und eine bevorzugte Obergrenze 5 x 10⁻⁷ m².

Eine zweite sinnvolle Größe ist das Verhältnis des Nächst-Nachbarabstandes der Abstandshalter zu der Boden- und /oder der Deckenplattendicke, je nachdem welche die geringere ist. Der bevorzugte Bereich liegt hier zwischen 8 und 20, eine bevorzugte Untergrenze bei 10 und eine bevorzugte Obergrenze bei 15. Dabei wird davon ausgegangen, daß die für die Platten des Entladungsgefäßes in Frage kommenden Materialien, insbesondere spezielle Gläser, im wesentlichen vergleichbare elastische Eigenschaften haben. Deswegen reicht die Plattendicke als Parameter hier für eine ungefähre Angabe völlig aus.

Welches der beiden geometrischen Kriterien entscheidend ist, hängt vom Einzelfall ab. Im allgemeinen ist es am besten, wenn die Abstandshalter in ihrer Anordnung sowohl auf die Plattendicke als auch auf die Streifendicke in der oben angegebenen Weise abgestimmt sind.

Eine weitere mögliche Ausgestaltung der Erfindung betrifft den bereits erwähnten Fall, daß zumindest ein Teil der Elektroden auf einer oder in einer Entladungsgefäßwand angeordnet ist, die transparent ausgeführt ist und zur Abstrahlung des erzeugten Lichtes dient. (Der Begriff Licht ist hier bevorzugt auf sichtbares Licht zu beziehen, schließt jedoch andere Spektralbereiche, insbesondere im UV, nicht aus.) Bei der bevorzugten Ausgestaltung ist nun ein Elektrodenaufbau vorgesehen, der den größten Teil der Stromtragfähigkeit in einem ersten elektrisch gut leitfähigen Teil zeigt und darüber hinaus einen zweiten Teil aufweist, der bei größerer Breite als der erste Teil zwar eine geringere Leitfähigkeit hat, dafür aber aus einem zumindest teilweise transparenten (im Hinblick auf die gewünschte Strahlung) Material besteht. Die beiden Teile sind elektrisch leitend miteinander verbunden, was bei einem Hochfrequenzbetrieb der Lampe auch in einer rein kapazitiven Kopplung realisiert sein kann.

Der Sinn dieser Konstruktion besteht zum einen darin, daß der vergleichsweise schmale erste Teil aus einem im Hinblick auf die Stromtragfähigkeit ausgewählten Material, beispielsweise einem Metall wie Silber, Gold, Aluminium oder Kupfer, ausgeführt sein kann, während die geringe Breite für eine besonders geringe Abschattungswirkung in der transparenten Entladungsgefäßwand sorgt. Andererseits lassen sich beliebig schmale Elektroden bei der dielektrisch behinderten Entladung nur unter Schwierigkeiten verwenden, weil die starke Feldkonzentration zu unerwünschten Raumladungseffekten führt. Dementsprechend wird durch den zweiten, elektrisch angekoppelten Teil das Potential des ersten Teils auf eine breitere Fläche "verteilt", so daß hinsichtlich der Physik der Entladung die größere Breite des zweiten Teils zählt.

Es ist dabei bevorzugt - schon wegen der einfachen Herstellung - aber nicht notwendig, daß die beiden Teile der Elektroden unmittelbaren Kontakt miteinander haben. Bevorzugt ist insbesondere, daß die Elektrodenteile auf der gleichen Fläche abgeschieden sind und der zweite Teil derart über den zunächst abgeschiedenen ersten Teil gelegt ist, daß sich insgesamt eine im wesentlichen rechteckige Querschnittsform ergibt (die durch den ersten Teil etwas "ausgebeult" sein kann).

Über eine einzelne Gasentladungslampe hinaus bezieht sich die Erfindung auch auf ein Beleuchtungssystem aus einer Lampe in der vorstehend beschriebenen Art mit einer elektrischen Impulsleistungsquelle. Die Impulsleistungsquelle ist im Hinblick auf die dielektrisch behinderte Entladung in der Lampe optimiert und koppelt durch Pausen bestimmter Länge voneinander getrennte Wirkleistungspulse von bestimmter Länge in die Lampe ein, wobei sich jedoch ein kontinuierlicher Leuchtbetrieb der Lampe, also ohne sichtbares Flackern, ergibt. Der Begriff "kontinuierlich" ist hier natürlich auf die Auflösung des menschlichen Auges bezogen.

Des weiteren betrifft die Erfindung ein Flachbildschirmsystem, weil sich die hier beschriebene Lampe als Flachstrahler besonders zur Hinterleuchtung von Anzeigeeinrichtungen wie flachen Bildschirmen eignet. Dazu werden die Flachstrahlerlampe und der flache Bildschirm im wesentlichen parallel zueinander angeordnet. Ein Beispiel ist bei den Ausführungsbeispielen gezeigt. Insbesondere betrifft die Erfindung ein Flachbildschirmsystem, bei dem die zuvor erwähnte Impulsleistungsquelle inbegriffen ist.

Ein besonderer Aspekt zu dem Flachbildschirmsystem betrifft sogenannte Lichtverstärkungsfolien (oder auch -platten) die zwischen dem Flachbildschirm und der Lampe anzuordnen sind. Solche Folien enthalten eine prismenartig strukturierte Oberfläche zu zumindest einer Seite und können dadurch den Raumwinkelbereich des Lichtaustritts aus der Flachstrahlerlampe zur Hinterleuchtung des Flachbildschirrns zumindest in einer und vorzugsweise (etwa durch zwei Lichtverstärkungsfolien) in zwei Dimensionen einengen. Dadurch wird eine verbesserte Helligkeit erreicht.

### Beschreibung der Zeichnungen

Im Folgenden wird die Erfindung anhand verschiedener konkreter Ausführungsbeispiele in ihren unterschiedlichen Einzelaspekten illustriert, wobei die jeweils dargestellten Merkmale auch in anderen Kombinationen erfindungswesentlich sein können. Diese Ausführungsbeispiele sowie ein Vergleichsbeispiel aus dem Stand der Technik sind in den Figuren dargestellt. Im einzelnen zeigt bzw. zeigen:
Figur 1 eine schematische Darstellung zu den Anodenpaaren;
Figur 2 ein Vergleichsbeispiel zu Figur 1 nach dem Stand der Technik;
Figuren 3a und 3b einen erfindungsgemäßen Flachstrahler in der Draufsicht bzw. im Querschnitt;
Figur 4 eine Draufsicht auf eine erfindungsgemäße Elektrodenstruktur mit paarweisen Elektroden beider Polarität und äußerer Busstruktur;
Figur 5 eine Draufsicht auf eine erfindungsgemäße Elektrodenstruktur mit Kathoden, die Vorsprünge aufweisen, und paarweise angeordneten Anoden;
Figuren 6a und 6b eine erfindungsgemäße Flachstrahlerlampe mit einer Figur 5 vergleichbaren Elektrodenstruktur, jedoch ohne Busstruktur und zusätzlich mit Randverbreiterungen der Anoden, und zwar in einer teilweise aufgebrochenen Draufsicht bzw. in einer Seitenansicht;
Figuren 7a und 7b eine Draufsicht entsprechend Figur 6a auf ein demgegenüber geringfügig modifiziertes Ausführungsbeispiel mit äußerer Busstruktur und eine Seitenansicht entsprechend Figur 6b;
Figur 8 eine Querschnittsansicht zur Illustration einer Durchführung einer Doppelanode in den beiden vorherigen Ausführungsbeispielen;
Figur 9a und 9b eine erfindungsgemäße Flachstrahlerlampe mit Elektroden auf einer Boden- und auf einer Deckenplatte, und zwar in einer Seitenansicht ähnlich Figur 6b und 7b und in einem demgegenüber vergrößerten Querschnitt durch einen Ausschnitt aus der Lampe ähnlich Figur 8;
Figur 10 eine von der Lichtaustrittsseite her gesehene Querschnittsansicht einer erfindungsgemäßen Flachstrahlerlampe zur Illustration der Anordnung von Abstandshaltern;
Figur 11 eine Ausschnitts- und Querschnittsansicht durch einen erfindungsgemäßen Flachstrahler zur Illustration einer zweiteiligen Kathode;
Figur 12 eine Figur 11 entsprechende Querschnittsansicht zu einer weiteren Möglichkeit für eine zweiteilige Kathode;
Figur 13 eine Draufsicht auf ein erfindungsgemäßes Beleuchtungssystem mit einer Impulsleistungsquelle;
Figur 14 eine Schnittansicht durch ein erfindungsgemäßes Flachbildschirmsystem.

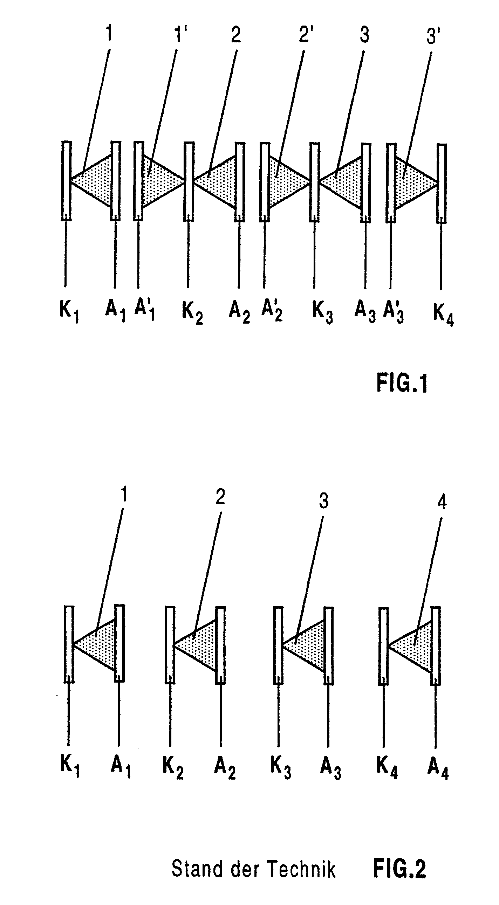

Die Figuren 1 und 2 zeigen zunächst im Vergleich zum Stand der Technik den Aufbau und die Funktion der erfindungsgemäßen paarweisen Anordnung von Anoden. Es sind jeweils bezüglich der Längsrichtung nur Ausschnitte aus einer Elektrodenanordnung gezeigt, die in etwa auf die Länge einzelner Entladungsstrukturen eingeschränkt sind. In Figur 2 erkennt man zunächst, daß sich einzelne Entladungsstrukturen 1, 2, 3, 4 jeweils von einer Kathode K zu einer Anode A erstrecken, wobei jedoch von jeder Kathode und von jeder Anode ausgehend jeweils nur eine Entladungsstruktur brennt. Dementsprechend gibt es ungenutzte Zwischenräume, nämlich zwischen der Anode A₁ und der Kathode K₂, zwischen der Anode A₂ und der Kathode K₃ sowie zwischen der Anode A₃ und der Kathode K₄, in denen keine Entladungen brennen.

Die dabei angenommene Regelmäßigkeit der alternierenden Reihenfolge von Zwischenräume mit und ohne Entladungsstruktur ist nicht unbedingt zwingend sondern eine von mehreren Möglichkeiten. Jedenfalls haben die Erfinder nie beobachtet, daß zu einer einzigen Anode A zwei Entladungsstrukturen brennen. Auf einer Kathode K können jedoch durchaus zwei Entladungsstrukturen enden.

Demgemäß sieht die erfindungsgemäße Anordnung in Figur 1 jeweils paarweise nebeneinanderliegende Anodenstreifen mit Anoden A und A' vor. Bei im Vergleich zu den Kathoden-Anoden-Abständen deutlich geringerem Abstand zwischen den beiden Anoden eines Paares ergibt sich eine höhere Zahl von Entladungsstrukturen bezogen auf die Längeneinheit in senkrechter Richtung zu der Streifenrichtung als bei einer Struktur nach Figur 2. Dies liegt daran, daß in jeder Nächst-Nachbarpaarung aus Anode A bzw. A' und Kathode K eine Entladungsstruktur brennt. Die Verhältnisse in Figur 1 (und natürlich auch in Figur 2) muß man sich natürlich in Streifenrichtung der Elektroden jeweils vervielfacht vorstellen. Es ist sozusagen nur eine Längeneinheit in Streifenrichtung dargestellt.

Wesentlich ist, daß die Anoden A aus Figur 2 in Figur 1 jeweils paarweise als Anoden A und A' vorliegen, so daß zusätzlich zu Figur 2 die Entladungsstrukturen zwischen A1' und K2, zwischen A2' und K3 und zwischen A3' und K4 hinzukommen. Bei gleichbleibendem Anoden-Kathoden-Abstand und relativ kleinem Abstand zwischen den Anoden A und A' eines Paares ergibt sich dadurch fast eine Verdoppelung der Entladungsstrukturzahl pro Längeneinheit senkrecht zur Streifenrichtung. Der Übersichtlichkeit halber ist in Figur 1 ein relativ großer Abstand zwischen den Anoden A und A' dargestellt.

Zu der Struktur in Figur 2 ist zu vermerken, daß sie neben der vergleichsweise geringen Dichte von Entladungsstrukturen auch keine Vorhersage zuläßt, zu welcher Seite ausgehend von einer bestimmten Anode sich eine Entladungsstruktur ausbildet. Z. B. könnte die zwischen der Kathode K3 und der Anode A3 brennende Entladung statt dessen auch zwischen der Anode A3 und der Kathode K4 liegen. Diese Unvorhersagbarkeit ist gekoppelt mit einer größeren Ungleichmäßigkeit im statistischen Mittel der Lichterzeugung pro Fläche und einer grundsätzlichen Möglichkeit von Fluktuationen über die Zeit. Diesen Nachteilen könnte zwar mit einer Verkleinerung des Abstandes zwischen bestimmten benachbarten Kathoden und Anoden, also z. B. den in Figur 2 gleich indizierten gegenüber den Paaren mit unterschiedlichem Index, abgeholfen werden, jedoch würde dabei die Dichte von Entladungsstrukturen pro Längeneinheit senkrecht zur Streifenrichtung noch stärker reduziert.

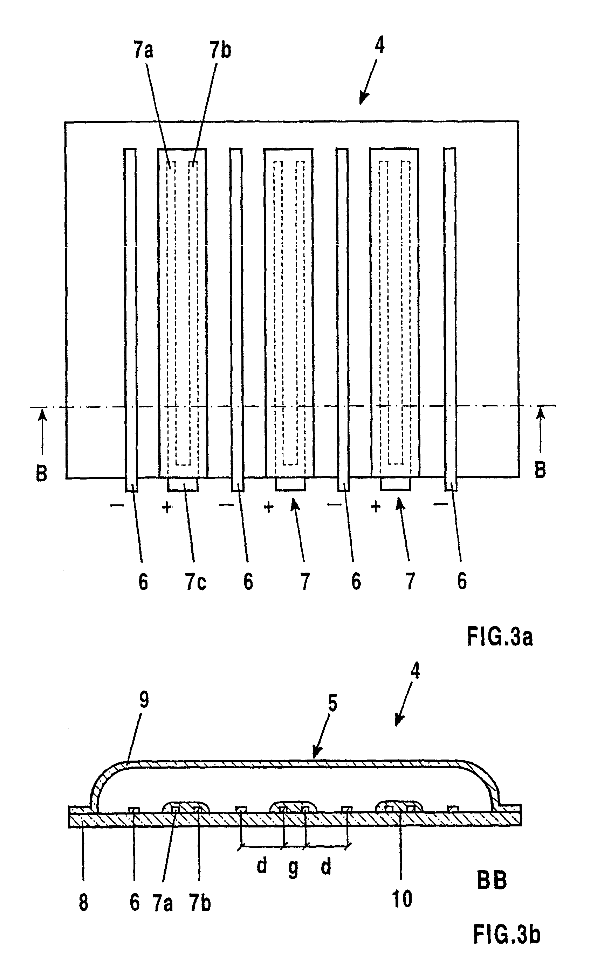

Die Figuren 3a und 3b zeigen einen erfindungsgemäßen Flachstrahler mit einer Figur 1 vergleichbaren Elektrodengeometrie. Dieser Flachstrahler könnte sowohl zur UV- oder VUV-Erzeugung dienen, bei Verwendung geeigneter Leuchtstoffe aber auch zur Beleuchtung mit sichtbarem Licht. In den Figuren 3a und 3b ist der Flachstrahler mit 4 bezeichnet, wobei Figur 3b zeigt, daß er aus einem flachen Entladungsgefäß 5 mit rechteckiger Grundfläche besteht. Das Entladungsgefäß 5 weist eine Bodenplatte 8 auf und auf der Lichtaustrittsseite (in Figur 3b oben) einen eher wannenartigen, in seiner Mitte plattenförmigen Deckel 9, der in Figur 3a nicht dargestellt ist. Das gesamte Entladungsgefäß 5 besteht aus Glas und ist mit einer Xenon-Gasfüllung mit ca. 13 kPa gefüllt.

Auf der Bodenplatte 8 sind alternierend einfache streifenförmige Kathoden 6 sowie paarweise verdoppelte Anoden 7a und 7b angeordnet. Sie werden durch Siebdruck vor der Befestigung des Deckels 5 auf die Bodenplatte 8 aufgedruckt. In der Draufsicht in Figur 3a zeigt sich, daß die Elektroden an einer Seite der Bodenplatte 8 über deren Rand hinausgehen. Dabei sind sie unter der gasdichten Verbindung (mittels Glaslot) zwischen dem Deckel 9 und der Bodenplatte 8 durchgeführt, ohne daß dort die Elektrodenstreifengeometrie verändert wäre. Die Elektrodenstreifen sind vielmehr so flach, daß beim Aufbringen des Deckels 9 mit dem Glaslot auf die Elektrodenstreifen aufgeklebt werden kann.

Figur 3b zeigt, daß der Deckel 9 an den Seiten bis zum Rand der Bodenplatte 8 reicht, so daß die Elektrodenstreifen in Figur 3a an der unteren Seite unter dem Deckel 9 herausragen. Dabei sind die Anodenpaare 7a und 7b in der Art einer Gabel am Ende 7c zusammengeführt (im gezeigten Fall zum Teil noch unter der Glaslotverbindung).

Der Kathoden-Anoden-Abstand d in Figur 3b beträgt 10 mm; der Abstand g zwischen benachbarten Anoden 7a und 7b 4 mm.

Die Anoden sind in demjenigen Umfang mit einer etwa 150 µm dicken Glasschicht 10 als Dielektrikum für die dielektrisch behinderte Entladung bedeckt, in dem sie auf der Bodenplatte 8 aufliegen.

Im Betrieb bilden sich über der Elektrodenstruktur Einzelentladungen nach dem Muster aus Figur 1 aus. Dabei wird bei diesem konkreten Beispiel ein Gewinn in der auf die gleiche Flächeneinheit einkoppelbaren Leistung von etwa 75 % im Vergleich zu konventionellen Beispielen erzielt.

Weitere Einzelheiten zu der in den Figuren 3a und 3b dargestellten Flachstrahlerlampe, die eine optionale Ausgestaltung als Flachstrahlerlampe zur Hinterleuchtung von Anzeigeeinrichtungen mit sichtbarem Licht betreffen, sind nicht weiter in den Figuren dargestellt. Dabei sind die Innenwände des Entladungsgefäßes 5 mit einer geeigneten Leuchtstoffmischung beschichtet, die die von der Entladung erzeugte VUV-Strahlung in sichtbares Licht konvertiert. Es kann dies ein Dreibanden-Leuchtstoffgemisch für die Erzeugung des Farbeindrucks Weiß sein oder ein anderes Leuchtstoffgemisch. Bevorzugte Beispiele für verwendbare Leuchtstoffe finden sich in der Anmeldung "Signallampe und Leuchtstoffe dazu" (beim Europäischen Patentamt eingereicht am 23.12.1997, AZ 97122800.2, Kopie anbei). Die Innenwand auf der Bodenplatte 8 ist außerdem mit einer Lichtreflexionsschicht z. B. aus Al₂O₃ oder TiO₂ beschichtet. Damit wird zusätzlich in der darüber liegenden Leuchtstoffschicht erzeugtes Licht nach oben zur Seite des transparenten Deckels 5 hin reflektiert.

Insgesamt ist diese Flachstrahlerlampe 4 für die Hinterleuchtung eines flachen Bildschirms so ausgelegt, daß eine möglichst gleichmäßige flächenartige Lichterzeugung gewährleistet ist. Außerdem soll die Lichtleistung möglichst hoch sein, wofür sich die beschriebene Doppelanodenstruktur anbietet.

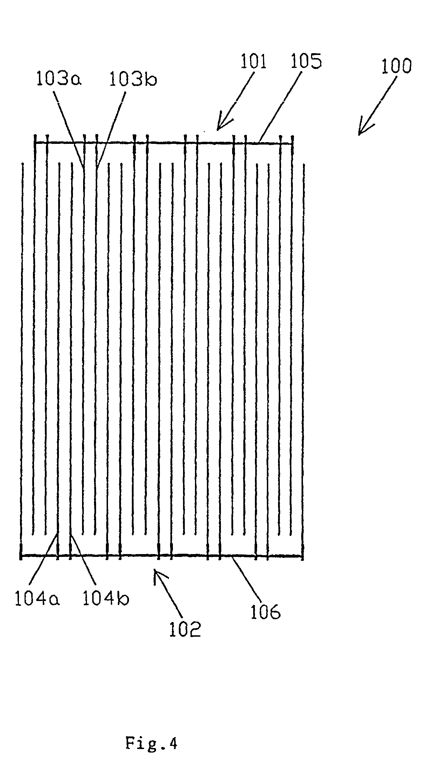

Figur 4 zeigt schematisch eine für eine bipolar betriebene dielektrisch behinderte Entladung geeignete Elektrodenstruktur. Dabei sind die Elektroden beider Polaritäten in Paaren angeordnet und mit einem Dielektrikum beschichtet. Somit kann jede Elektrode abwechselnd als Anode und als Kathode wirken. Die mit 100 bezeichnete Struktur besteht zunächst aus einem ersten Teil 101 und einem zweiten Teil 102. Jeder dieser Teile 101 und 102 enthält eine Anzahl von Doppelelektrodenstreifen mit einzelnen Elektroden 103a und 103b (für den Teil 101) bzw. 104a und 104b (für den Teil 102) in einem jeweiligen Paar. Vom Randbereich abgesehen (in dem auch kein Elektrodenpaar vorliegt) ist die Struktur damit bezüglich der Elektroden der beiden Polaritäten symmetrisch.

In ebenfalls symmetrischer Weise sind die paarweise angeordneten Elektroden eines jeden Teils 101 bzw. 102 zusammengeführt zu einer Stromversorgungsbusstruktur 105 bzw. 106. Damit hat jede Elektrodengruppe (einer Polarität) eine kammähnliche Struktur mit doppelten "Zinken", wobei die Kammstrukturen miteinander verschränkt sind. Bei diesem Beispiel sind die Elektrodenabstände innerhalb der Paare und zwischen den Paaren jeweils gleich. Dadurch läßt sich die Lampe im Vergleich zu kleineren Abständen bei kleineren Leistungen betreiben, was in bestimmten Anwendungsfällen von Vorteil ist.

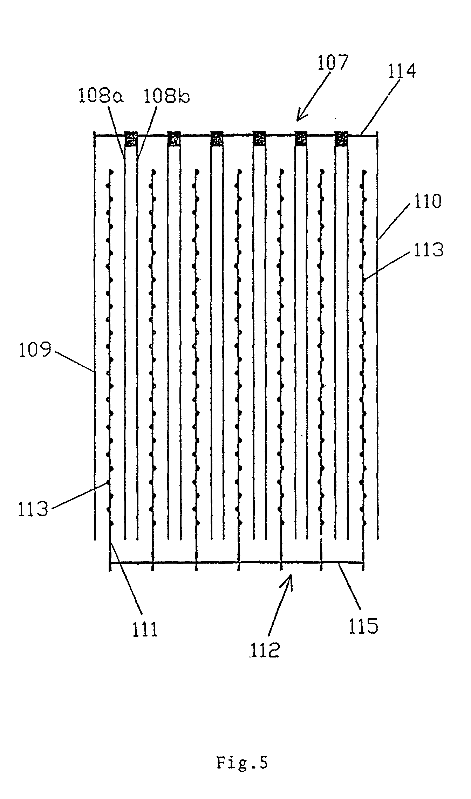

Figur 5 ist gegenüber Figur 4 dahingehend abgewandelt, daß die dort gezeigte Elektrodenstruktur zwar aus zwei Teilen 107 und 112 besteht, der Teil 112 jedoch nicht paarweise ausgebildet ist und damit Kathoden 111 für einen unipolaren Betrieb bildet. Hingegen sind die Anodenstreifen 108a und 108b des Anodenteils 107 in der beschriebenen Weise paarweise ausgeführt. Lediglich als Außenabschluß liegen jeweils einzelne Anodenstreifen 109 und 110 vor.

Die in der Beschreibungseinleitung bereits erwähnten Vorsprünge zur lokalen Festlegung von Entladungsstrukturen sind bei diesem Ausführungsbeispiel durch halbkreisförmige Nasen 113 an den Kathoden 111 des Kathodenteils 112 realisiert. Sie sind jeweils alternierend einer der beiden benachbarten Anoden zugeordnet. Durch die lokalen Verstärkungen des elektrischen Feldes zünden die Einzelentladungen ausschließlich an den durch die Nasen 113 festgelegten Stellen.

Neben dem bereits erwähnten Aspekt einer Homogenisierung oder gezielten Beeinflussung der Leuchtdichteverteilung kann damit auch einer Konvektionsverschiebung der Einzelentladungen bei nicht-waagerechtem Betrieb der dargestellten Lampe entgegengewirkt werden.

Die busartigen Stromzuführungen 107 und 112 entsprechen den bereits zuvor dazu gegebenen Erklärungen.

Die in den Figuren 4 und 5 dargestellten Anordnungen entsprechen jeweils einer Flachstrahlerlampe mit einer Diagonale von 6,8 Zoll für eine Flachbildschirmhinterleuchtung. Ein besonderer Vorteil der in dieser Anmeldung dargestellten Strukturen liegt jedoch darin, daß sich sowohl die Elektrodenpaare als auch die erfindungsgemäß ausgestalteten Stromdurchführungen (auf die im weiteren noch eingegangen wird) als auch besondere Elektrodenformen (wie in Figur 5 und in anderer Weise bei den folgenden Figuren) durch einfache Herstellungsverfahren wie übliche Verfahren der Dickschichttechnik, etwa Siebdruck mit nachfolgendem Einbrennen, herstellen lassen. Insbesondere können dabei durch gegebenenfalls räumlich sukzessive Aneinanderreihungen praktisch beliebig große Formate erzeugt werden, so daß die hier dargestellten Strukturen nur Beispiele sind, die für die Praxis auch um ein Vielfaches mehr einzelne Elektroden aufweisen könnten.

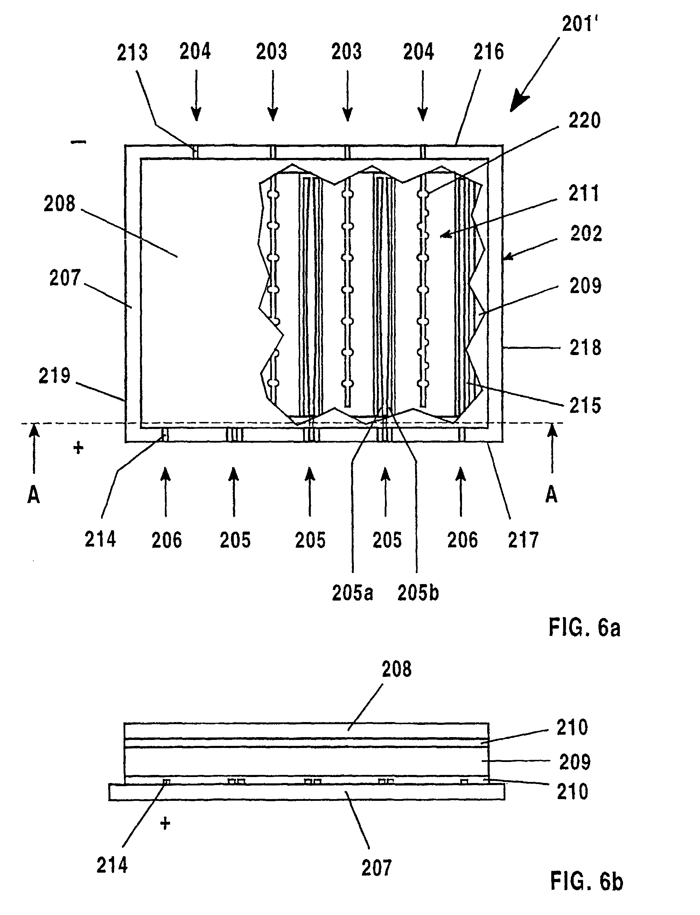

Die Figuren 6a und 6b zeigen eine weitere Flachstrahlerlampe 201' mit einem flachen Entladungsgefäß 202 mit rechteckiger Grundfläche. Die dabei verwendete Elektrodengeometrie hat Ähnlichkeiten mit der in Figur 5 gezeigten. Allerdings sind die Kathoden 203 und 204 hier nach oben herausgeführt und nicht über einen Stromzuführungsbus verbunden. Die Kathoden 203 weisen wiederum Vorsprünge 220 auf, die hier größtenteils nicht alternierend sondern jeweils paarweise angeordnet sind. Bei den äußersten Kathoden 204 sind diese Vorsprünge im Außenbereich des einzelnen Kathodenstreifens 204 in höherer Dichte (dabei wieder teilweise alternierend) angeordnet, um die Leuchtdichte in den Ecken des Rechtecks zu erhöhen. Rand- und Eckbereiche sind nämlich durch das Fehlen des Beitrags der fehlenden Nachbarelektroden nach außen hin in vielen Fällen gegenüber der Leuchtdichte in der Mitte einer Flachstrahlerlampe abgedunkelt.

Die Anodenstreifen 205 sind in der diskutierten Weise als Paare ausgeführt. Die äußersten Anoden 206 liegen jedoch einzeln vor. Dabei sind die Anodenstreifen 205 in den Anodenpaaren zu den jeweiligen Rändern des Rechtecks hin gegenüber der Mitte des Rechtecks verbreitert, und zwar jeweils zu der anderen Anode des Paares hin gerichtet, wie mit 205a und 205b bezeichnet. Damit ist der Abstand zur Nächst-Nachbarkathode 203 bzw. 204 konstant, einer Abschattung der Ränder des Rechtecks wird jedoch zusätzlich entgegengewirkt. Der größte Abstand zwischen den Anodenstreifen eines Anodenpaares 205 in der Streifenmitte beträgt etwa 4 mm, der kleinste Abstand am Rand etwa 3 mm.

Die Vorsprünge bzw. Nasen 220 haben einen Radius von etwa 2 mm und verkürzen den Abstand zu dem benachbarten Anodenstreifen auf etwa 6 mm.

Mit 215 ist eine die Anoden 205 und 206 als Dielektrikum abdeckende Glasschicht von ungefähr 250 µm Dicke bezeichnet. Sie liegt über allen Anodenstreifen 205 und 206 im Inneren des Entladungsgefäßes vor.

Das Entladungsgefäß 202 ist in Figur 6b in einer Seitenansicht gezeigt. Es besteht aus einer Bodenplatte 207 und einer Deckenplatte 208 sowie einem beide verbindenden Rahmen 209. Die Verbindung zwischen dem Rahmen 209 und den Platten 208 und 207 ist durch eine Glaslotschicht 210 hergestellt. Im unteren Bereich der Figur 6b ist zu erkennen, daß die Elektrodenstreifen durch diese Glaslotschicht 210 durchgeführt sind. Mit der Bezugsziffer 214 ist beispielsweise der äußere Anschlußbereich der äußersten linken Anode 206 in Figur 6a dargestellt. Die Kathoden 203 und 204 sind zu der in Figur 6b nicht sichtbaren anderen Seite hin in gleicher Weise durchgeführt. Dazu ist das von der Deckenplatte 208 und dem Rahmen 209 im Grundriß gebildete Rechteck nach zumindest der in Figur 6a oberen und unteren Seite hin kleiner als der rechteckige Grundriß der Bodenplatte 207. Auf den entstehenden Absätzen bilden die herausgeführten Elektrodenstreifen 213 (der Kathode 204) und 214 entsprechende Anschlußstücke.

Das quaderförmige Innere 211 des Entladungsgefäßes 202 ist vollständig mit einem Leuchtstoffgemisch beschichtet, das in den Figuren nicht dargestellt ist und die in der Entladung erzeugte VUV-Strahlung in sichtbares weißes Licht umwandelt. Es handelt sich um einen Dreibandenleuchtstoff mit der Blaukomponente BAM (BaMgAl₁₀O₁₇:Eu²⁺), der Grünkomponente LAP (LaPO₄:[Tb³⁺, Ce³⁺]) und der Rotkomponente YOB ([Y,Gd]BO₃:Eu³⁺). Zu den Leuchtstoffen wird, wie bereits erwähnt, auf die Anmeldung "Signallampe und Leuchtstoffe dazu" verwiesen.

Die beschriebenen Anschlußstücke 213 und 214 der Elektrodenstreifen auf dem Absatz der Bodenplatte 207 werden mit nicht dargestellten Steckverbindern und Verbindungsleitungen jeweils untereinander und zusammen mit den Polen einer unipolaren Impulsspannungsquelle verbunden.

Eine Ausführung der Flachstrahlerlampe nach den Figuren 6a und 6b zur Hinterleuchtung eines 15 Zoll-Monitors könnte beispielsweise aus 14 Doppelanodenstreifen und 15 Kathoden bestehen mit jeweils einem einzelnen Anodenstreifen am äußersten Rand. Jeder Kathodenstreifen 203 und 204 könnte dabei nach jeder Längsseite jeweils 32 Fortsätze 220 aufweisen. Eine solche Flachstrahlerlampe hätte Abmessungen von etwa 315 mm x 239 mm x 10 mm bei einer Wandstärke der Bodenplatte 207 und der Deckenplatte 8 von jeweils 2,5 mm. Der Rahmen 209 könnte aus einem Glasrohr von etwa 5 mm Durchmesser bestehen, so daß als (im Folgenden noch näher diskutierte) Abstandshalter 48 Präzisionsglaskugel mit einem Durchmesser von 5 mm geeignet wären.

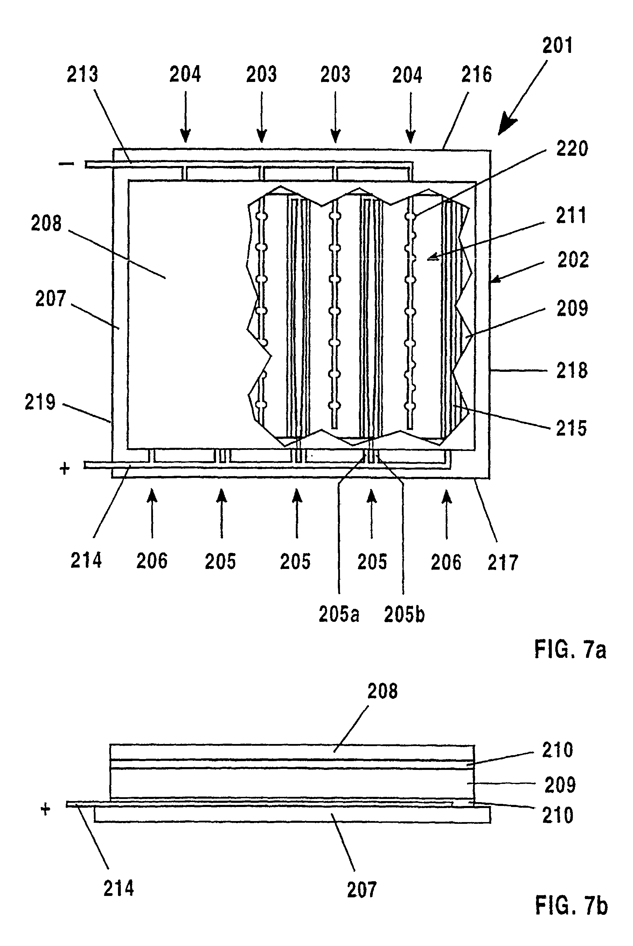

Die Figuren 7a und 7b entsprechen weitgehend den Figuren 6a und 6b. Die Unterschiede der hier dargestellten Flachstrahlerlampe 201 zu der zuvor beschriebenen 201' sind die folgenden: Die bereits beschriebenen und mit den gleichen Bezugsziffern bezeichneten äußeren Anschlußstücke 213 und 214 sind hier als äußere busartige Stromzuführung zusammengeführt und weitergeführt. Dementsprechend gibt es einen gemeinsamen, über den Rand der Bodenplatte 207 hinausragenden Kathodenanschluß 213 in Figur 7a in der oberen linken Ecke und einen entsprechenden gemeinsamen Anodenanschluß 214 in der unteren linken Ecke. Dieser äußere Stromzuführungsbus 214 der Anoden ist auch in der Seitenansicht in Figur 7b zu erkennen. Im übrigen entspricht die Struktur der zuvor beschriebenen und ist entsprechend mit Bezugsziffern bezeichnet.

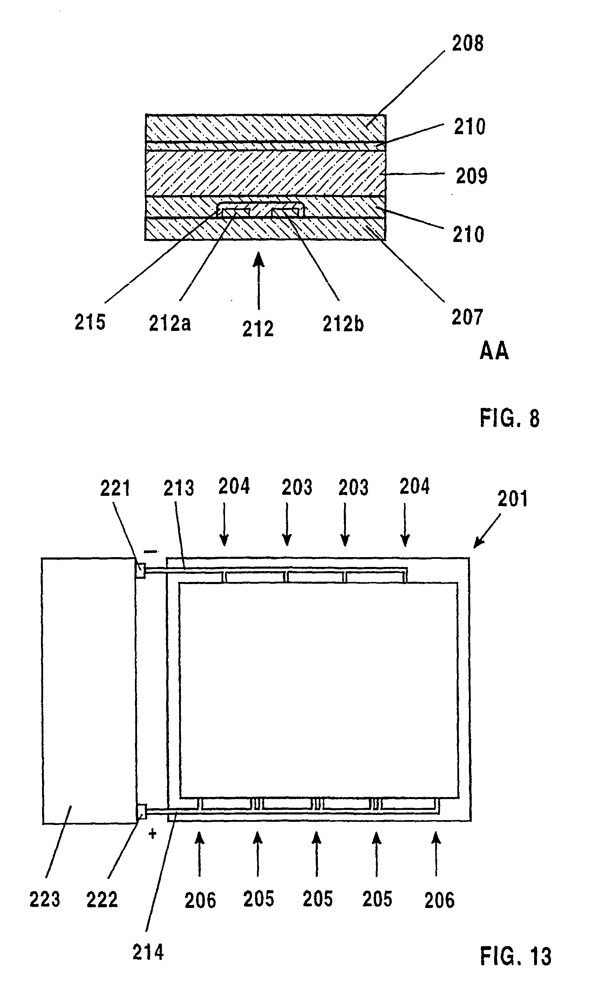

Zu der in den Figuren 6a, 6b, 7a und 7b dargestellten Struktur (von den Stromzuführungsbussen einmal abgesehen) zeigt Figur 8 eine Ausschnittsund Querschnittsansicht. Es handelt sich um einen Ausschnitt der in Figur 6a mit der Linie A-A angedeuteten Querschnittsansicht. Dieser Ausschnitt umfaßt zwei Anodenstreifen, und zwar im Bereich ihrer Durchführung 212a und 212b durch die Grenze des Entladungsgefäßes. Man erkennt, daß die beiden Anodendurchführungen 212a und 212b im Gegensatz zu konventionellen Durchführungen und genau so wie entlang der übrigen Länge der Anodenstreifen unmittelbar auf der Bodenplatte 207 aufgebracht sind und in diesem Bereich noch vollständig von der das Dielektrikum der dielektrisch behinderten Entladung bildenden Glasschicht 215 abgedeckt sind.

Jeder Anodenstreifen hat einen im wesentlichen rechteckigen Querschnitt und wird damit - im hier gezeigten Fall einschließlich der Glasschicht 215 - vollständig von der Glaslotschicht 210 eingeschlossen, die den Glasrahmen 209 mit der Bodenplatte 207 verbindet und für einen gasdichten Abschluß sorgt. Eine äquivalente Glaslotschicht 210 liegt auch zwischen dem Glasrahmen 209 und der Deckenplatte 208. Wenn die Glasschicht 215 in diesem Bereich bereits weggelassen wäre, so müßte die untere Glaslotschicht 210 kaum dicker als die obere sein.

Die hier dargestellten Doppelanodendurchführungen 212a und 212b stehen exemplarisch für die anderen Anodendurchführungen. Bei den Durchführungen der Kathoden 203 und 204 zur anderen Seite hin liegen im Prinzip die gleichen Verhältnisse vor; die Kathoden 203 und 204 treten lediglich einzeln auf, und es fehlt die Glasschicht 215.

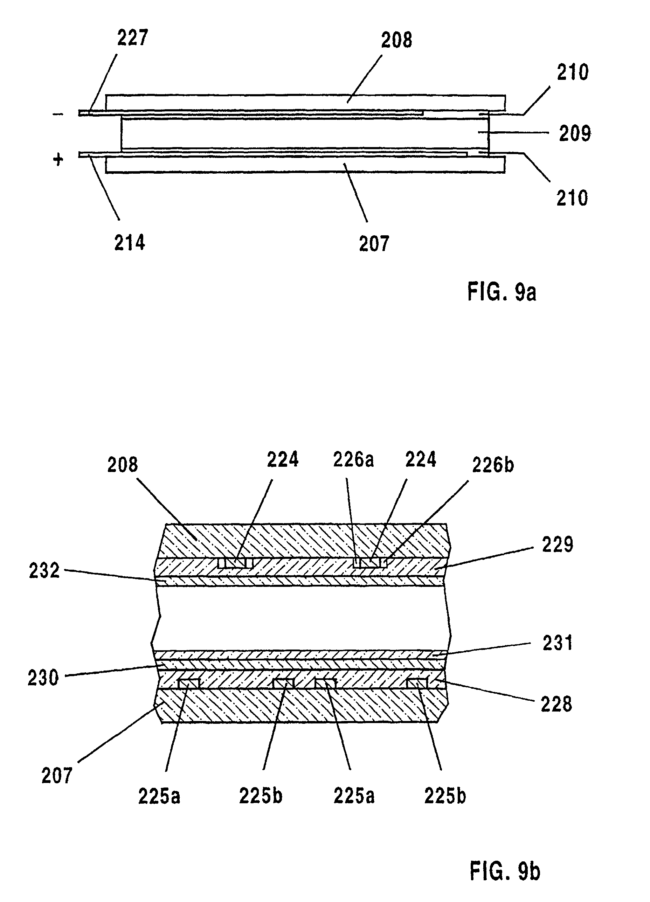

Die Figuren 9a und 9b zeigen wiederum schematisch eine weitere Variation der in Figuren 6a, 6b, 7a und 7b sowie 8 dargestellten Flachstrahlerlampen. Figur 9a entspricht dabei den Seitenansichten in den Figuren 6b und 7b, und Figur 9b zeigt eine Querschnitts- und Ausschnittsansicht entsprechend Figur 8.

Ein wesentlicher Unterschied zu den zuvor dargestellten Lampen besteht darin, daß bei der Variante der Figuren 9a und 9b die Kathoden 224 auf der Innenwand der Deckenplatte 208 aufgebracht sind. Eine alternierende Reihenfolge von Anodenpaaren 225a, 225b und Kathoden 224 besteht dennoch, und zwar in der Gestalt, daß eine gedachte Verbindung einer Kathode 224 mit den jeweils nächstbenachbarten Anoden 225a und 225b (aus verschiedenen Paaren) die Form eines umgekehrten und symmetrischen V ergibt. Dabei sind in diesem Fall die Abstände zwischen den Kathoden 224 etwa 22 mm groß, die Abstände zwischen den einzelnen Anoden 225a, 225b eines Anodenpaares etwa 4 mm und zwischen den benachbarten Anoden verschiedener Anodenpaare etwa 18 mm.

Figur 9b zeigt ferner andeutungsweise die bereits beschriebenen nasenartigen Vorsprünge 226a und 226b an den Kathoden 224. Diese Vorsprünge liegen in Streifenrichtung in einem Abstand von etwa 10 mm voneinander.

Der in Figur 9b dargestellte Aufbau steht wiederum exemplarisch für die gesamte Breite der Flachstrahlerlampe. Mit dieser Anordnung ergeben sich Entladungsstrukturen zwischen Bodenplatte 207 und Deckenplatte 208 mit größerer Schlagweite als der Abstand zwischen Boden- und Deckenplatte. Es hat sich herausgestellt, daß sich mit dieser Anordnung höhere UV-Ausbeuten erzielen lassen als bei Anordnung aller Elektroden auf nur einer Platte. Vermutlich ist dies in einer Verringerung der Wand- und Elektrodenverluste begründet.

Figur 9a zeigt ferner, daß sowohl die Kathoden 224 als auch die Anoden 225a, 225b jeweils an äußeren busartigen Stromzuführungen 227 bzw. 214 angeschlossen sind, deren Anschlußpunkt in Figur 9a auf der linken Seite über die Deckenplatte 208 bzw. die Bodenplatte 207 hinausragt.

Eine weitere Besonderheit dieses Ausführungsbeispiels ist, daß sowohl die Kathoden 224 als auch die Anoden 225a, 225b vollständig mit einer dielektrischen Glasschicht 229 bzw. 228 bedeckt sind, die im übrigen die gesamte jeweilige Innenwand der Deckenplatte 208 bzw. Bodenplatte 207 abdeckt. Die Elektroden sind also gewissermaßen in die Glaswände der Lampe eingebettet.

Auf der dielektrischen Glasschicht 228 der Bodenplatte 207 ist ferner eine lichtreflektierende Schicht 230 aus Al₂O₃ aufgebracht. Darauf liegt - genau so wie auch auf der dielektrischen Glasschicht 229 auf der Deckenplatte 208 - eine Leuchtstoffschicht 231 bzw. 232 aus einem BAM-LAP-YOB-Gemisch.

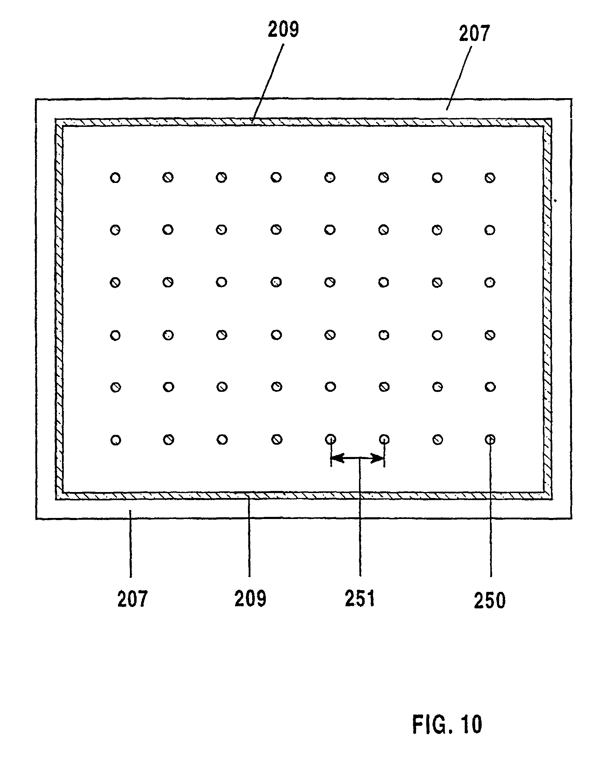

Figur 10 zeigt ein weiteres, der Übersichtlichkeit halber in den Figuren 6a-9b nicht dargestelltes Merkmal der Flachstrahlerlampen. In einer durch die Ebene des Glasrahmens 209 geschnittenen Draufsicht auf die Bodenplatte 207 sind Abstandshalter 250 in einer quadratischen Gitteranordnung dargestellt. Weitere Einzelheiten der Lampe, insbesondere die Elektrodenstrukturen, sind der Übersichtlichkeit halber weggelassen.

Das quadratische Gitter der Abstandshalter hat einen Nächst-Nachbarabstand 251 von 34 mm. Wie bereits ausgeführt, handelt es sich dabei um 48 Präzisionsglaskugeln mit einem Durchmesser von jeweils 5 mm, die durch Glaslot und eine Wärmebehandlung mit der Bodenplatte 207 und der Deckenplatte 208 fest verbunden sind. Jede Glaskugel ist mit der bereits beschriebenen Reflexionsschicht 230 und Leuchtstoffschicht 231 beschichtet, um die Verluste zu minimieren. Das hier dargestellte quadratische Gitter in einem Nächst-Nachbarabstand von 34 mm bietet dabei einen guten Kompromiß zwischen einer guten mechanischen Festigkeit der Flachstrahlerlampen insgesamt und nicht zu großen Verlusten bei der Lichterzeugung. Bei der Anordnung der Abstandshalter 250 ist ferner zu beachten, daß sie so angeordnet sind, daß sie die Entladungsstrukturen möglichst wenig stören. Eine Möglichkeit besteht z. B. darin, sie mittig zwischen die jeweiligen Elektrodenstreifen zu setzen.

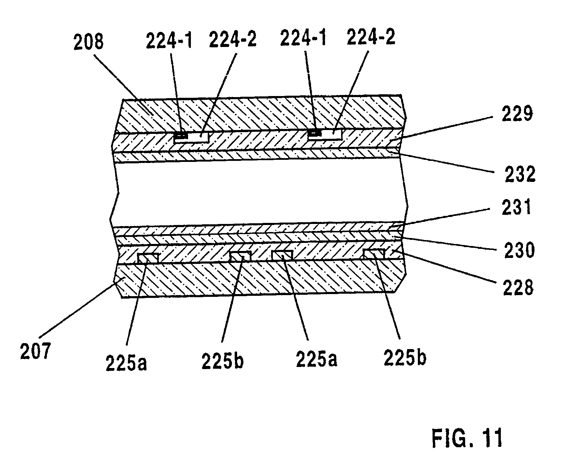

Figur 11 nimmt Bezug auf Figur 9b und zeigt gegenüber der dort dargestellten Struktur eine Variation des Aufbaus der Kathoden 224. Der Übersichtlichkeit halber sind keine Vorsprünge (in Figur 9b mit 226a und 226b bezeichnet) dargestellt. Sie sind bei dieser Ausführungsform dennoch möglich und sinnvoll.

Die wesentliche Änderung in der Kathodenstruktur besteht in einer Zweiteiligkeit. Jede Kathode 224 besteht nämlich aus einem ersten Teil 224-1, der mit der elektrischen Versorgung verbunden ist, und einem zweiten Teil 224-2. Der erste Teil 224-1 ist in Figur 11 in der oberen linken Ecke des zweiten Teils 224-2 eingezeichnet und besteht aus Silber. Der in der Querschnittsfläche sehr viel größere zweite Teil 224-2 besteht demgegenüber aus ITO (Indium-Zinn-Oxid), einem leitfähigen, aber transparenten Material.

Durch diese Auftrennung wird eine minimale Abschattung durch den nicht transparenten ersten Teil 224-1 bei gleichzeitig relativ großer effektiver Kathodenbreite des zweiten Teils 224-2 erreicht. Diese größere Kathodenbreite hilft bei der Vermeidung nachteiliger Raumladungseffekte vor den Kathoden 224. Andererseits wird der Nachteil der Struktur in Figur 9b behoben, daß durch die Anordnung von Elektroden auf bzw. unter der transparenten Deckenplatte 8 eine Abschattung der Lichtstrahlung entsteht. Dies betrifft vor allem den Fall, daß die häufig etwas breiteren Kathoden auf der transparenten Seite eines Entladungsgefäßes liegen sollen. In Figur 9b wiederum hätten die verdoppelten Anoden 225a und 225b zu einer noch stärkeren Abschattung geführt. Natürlich ist auch die Ausführung einer Doppelanode in jeweils zwei Teilen in der oben beschriebenen Weise möglich.

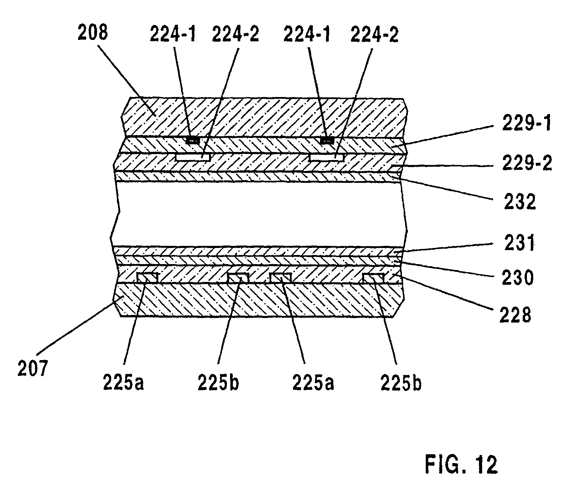

Um darzustellen, daß ein direkter körperlicher Kontakt zwischen den beiden Teilen 224-1 und 224-2 der Kathoden für eine elektrische Verbindung nicht unbedingt notwendig ist, zeigt Figur 12 ein Beispiel, bei dem die beiden Kathodenteile getrennt sind. Dies geschieht dadurch, daß auf der Deckenplatte 208 zunächst der erste Teil 224-1 abgeschieden wird, dann mit einem ersten Teil 229-1 der dielektrischen Schicht 229 abgedeckt wird, worauf der zweite Teil 224-2 der Kathoden abgeschieden wird. Es folgt der zweite Teil 229-2 der dielektrischen Schicht 229. Durch die kapazitive Kopplung zwischen den beiden Teilen 224-1 und 224-2 der Kathoden ist bei der hohen Betriebsfrequenz der hier zu verwendenden Impulsspannungsquelle eine ausreichende elektrische Verbindung zwischen den beiden Kathodenteilen gewährleistet.

Damit die größere effektive Kathodenbreite des zweiten Teils 224-2 für die Entladung auch gut wirksam werden kann, ist hier der zweite Kathodenteil 224-2 entladungsseitig von dem ersten Kathodenteil 224-1 angeordnet. Die Reihenfolge ist also aus der Perspektive der Entladung: Entladung - Leuchtstoffschicht 232 - zweite dielektrische Schicht 229-2 - zweiter Kathodenteil 224-2 - erste dielektrische Schicht 229-1 - erster Kathodenteil 224-1 - Dekkenplatte 208. In der Projektion auf die Bodenplatte 208 befindet sich der schmalere erste Kathodenteil 224-1 dabei vorzugsweise in der Mitte des zweiten Kathodenteils 224-2.

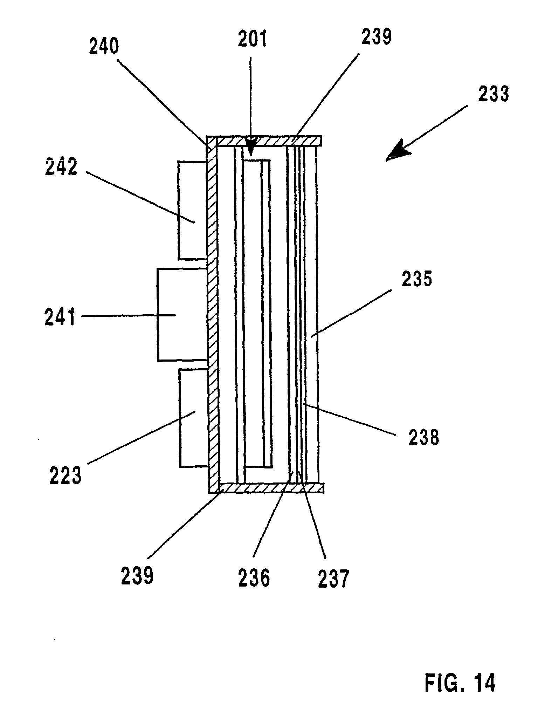

Figur 13 zeigt als Beispiel die Struktur aus Figur 7a in Verbindung mit einer Impulsspannungsquelle 223. Die bereits beschriebenen Stromzuführungsbusse 213 und 214 der Kathoden 203 und 204 und der Anoden 205 und 206 sind jeweils an einem entsprechenden Pol 221 bzw. 222 angeschlossen. Die hier in ihrem inneren Aufbau nicht näher dargestellte Impulsspannungsquelle 223 liefert unipolare Spannungspulse bestimmter Zeitdauer mit Pausen wiederum bestimmter Zeitdauer dazwischen. Es wird verwiesen auf die deutsche Patentanmeldung 195 48 003.1. Diese besondere Form der elektrischen Versorgung erzeugt eine Vielzahl einzelner deltaförmiger Entladungsstrukturen (in den Figuren nicht dargestellt) zwischen den Fortsätzen 220 der Kathoden 203 und 204 und der entsprechend nächst benachbarten Anode 205 bzw. 206. Die erfindungsgemäße Lampe wird durch diese Impulsspannungsquelle 223 zu einem Beleuchtungssystem ergänzt.

Figur 14 zeigt ein weiteres Ausführungsbeispiel, bei dem die gleiche Lampe 201 mit der Impulsspannungsquelle 223 als Hintergrundbeleuchtungssystem für einen Flachbildschirm 235 mit Flüssigkristalltechnik dient. Zwischen dem Flachbildschirm 235 und der Lampe 201 befindet sich lampenseitig eine Diffusorscheibe 236, die zum Kaschieren punktueller Unregelmäßigkeiten in der Lichterzeugung in der Lampe 201, insbesondere aufgrund der bereits beschriebenen Abstandshalter, dient. Auf der der Lampe abgewandten Seite der Diffusorscheibe 236 befinden sich zwei gekreuzte Lichtverstärkungsfolien 237 und 238 (sogenannte "Brightness Enhancement Films" der Firma 3M). Diese gekreuzten Lichverstärkungsfolien 237 und 238 weisen jeweils auf der lampenabgewandten Seite eine prismatisch strukturierte Oberfläche auf (wobei die Längskanten der Prismen in der Folienebene gekreuzt sind), wodurch die Lichtverstärkungsfolien 237 und 238 den relativ großen Raumwinkelbereich der Lichtabstrahlung der Lampe 201, zusätzlich vergrößert durch die Diffusorscheibe 236, jeweils in einer Dimension verengen.

Dieser gesamte Aufbau ist in einem Rahmen 239 eines Gehäuses gehalten. Eine Gehäuserückwand 240 trägt ferner eine Kühleinrichtung 241 und eine Ansteuerelektronik 242 für den Flachbildschirm 235. Bei einer besonderen Ausführungsform ist die Kühleinrichtung 241 als dünne Platte ausgeführt, die in gutem thermischem Kontakt zur Lampenrückseite steht und auf der anderen Seite Kühirippen aufweist oder in gutem thermischem Kontakt zu Kühlkörperrippen steht. Dadurch kann bei leistungsstarken Systemen auch die unmittelbare Rückwand des Flachbildschirmsystems gebildet sein. Details zu der Ansteuerelektronik 242 und dem Flachbildschirm 235 ergeben sich z. B. aus der EP 0 604 453.

Das in Figur 14 gezeigte Flachbildschirmsystem ist der bevorzugte Anwendungsfall für die Erfindung. Hier lassen sich mit einer besonders flachen Lampen sehr helle und gleichmäßige Hinterleuchtungen realisieren. Die quecksilberfreien, und damit umweltverträglichen Füllsysteme mit einem Edelgas, vorzugsweise Xenon, und evtl. einem oder mehreren Puffergasen, z. B. Argon oder Neon, bei einem Druck von etwa 10 kPa bis etwa 100 kPa erlauben einen Sofortstart ohne Anlaufverhalten. Dies ist z. B. bei Arbeitspausen sehr vorteilhaft, weil der Bildschirm zur Energieeinsparung abgeschaltet werden kann, ohne dadurch in seiner Leistung nach dem Wiedereinschalten beeinträchtigt zu sein. Es erübrigen sich auch äußere Reflektoren oder Lichtleiteinrichtungen zugunsten einer Minimierung der Baugröße des gesamten Bildschirmsystems und einer Verbilligung und Vereinfachung des Aufbaus. Ein wesentlicher Vorteil des erfindungsgemäßen Flachbildschirmsystems liegt in der - hinsichtlich der Lampe - erheblich größeren Lebensdauer gegenüber dem Stand der Technik. Es lassen sich ohne weiteres Werte weit über 20.000 Betriebsstunden erreichen, was mehr als einer Verdoppelung der konventionellen Werte entspricht.

## Patentansprüche

1. Gasentladungslampe mit einem zumindest teilweise transparenten und mit einer Gasfüllung gefüllten Entladungsgefäß (5, 202), einer Anzahl im wesentlichen streifenförmiger Anoden (A, 7, 103, 104, 108, 109, 110, 205, 206, 225) und Kathoden (K, 6, 103, 104, 111, 203, 204, 224), die auf Wandungen des Entladungsgefäßes und im wesentlichen parallel zueinander verlaufen, und einer dielektrischen Schicht (10, 215, 228, 229) zwischen zumindest den Anoden und der Gasfüllung für eine dielektrisch behinderte Entladung in dem Entladungsgefäß zwischen benachbarten Anoden und Kathoden,
**dadurch gekennzeichnet, daß** zumindest ein Anodenpaar (A, A', 7ab, 103ab, 104ab, 108ab, 205, 225ab) zwischen zwei jeweils einer Anode des Paares benachbarten Kathoden (K, 6, 103, 104, 111, 203, 204, 224) angeordnet ist.

2. Lampe nach Anspruch 1 als Flachstrahler.

3. Lampe nach Anspruch 1 oder 2, bei der das Entladungsgefäß (5, 202) aus elektrisch nichtleitendem Material besteht.

4. Lampe nach einem der vorstehenden Ansprüche, bei der der Abstand zwischen den Anoden des Paares (A, A', 7a, 7b, 103ab, 104ab, 108ab, 205, 225ab) untereinander kleiner ist als der Abstand zwischen einer jeweiligen Anode des Paares und der ihr benachbarten Kathode (K, 6, 103, 104, 111, 203, 204, 224).

5. Lampe nach einem der vorstehenden Ansprüche, bei der der Abstand der Anoden des Paares (A, A', 7a, 7b, 103ab, 104ab, 108ab, 205, 225ab) untereinander zwischen 20 % und 100 % der Schlagweite der Entladung beträgt.

6. Lampe nach einem der vorstehenden Ansprüche, bei der zumindest die Anoden (A, 7, 103, 104, 108, 109, 110, 205, 206, 225) oder die Kathoden (K, 6, 103, 104, 111, 203, 204, 224) auf einer Innenwand des Entladungsgefäßes (5, 202) aufgebracht und in einer Verlängerung ihrer Streifenform direkt durch eine die Gasfüllung begrenzende Grenze (209) des Entladungsgefäßes durchgeführt sind.

7. Lampe nach Anspruch 6, bei der das Entladungsgefäß (5, 202) zumindest eine Platte (8, 207) aufweist, die über die Grenze (209) des Entladungsgefäßes hinausgeht, und die Anoden (A, 7, 103, 104, 108, 109, 110, 205, 206, 225) oder Kathoden (K, 6, 103, 104, 111, 203, 204, 224) so auf der Platte aufgebracht sind, daß sie auf der Platte an der Grenze durch das Entladungsgefäß durchgeführt sind.

8. Lampe nach Anspruch 6 oder 7, bei der die Streifenform der Anoden (A, 7, 103, 104, 108, 109, 110, 205, 206, 225) oder Kathoden (K, 6, 103, 104, 111, 203, 204, 224) einen im wesentlichen rechteckigen Querschnitt mit einer Dicke im Bereich von 3-50 µm, vorzugsweise von mehr als 5 oder 8 µm und mit einer Breite von 0,3-1,5 mm, vorzugsweise 0,5-1,2 mm, aufweist.

9. Lampe nach Anspruch 6, 7 oder 8, bei der sowohl die Anoden (A, 7, 103, 104, 108, 109, 110, 205, 206, 225) als auch die Kathoden (K, 6, 103, 104, 111, 203, 204, 224) auf der Innenwand aufgebracht sind und in einer Verlängerung ihrer Streifenform direkt durch die Grenze (209) des Entladungsgefäßes (5, 202) durchgeführt sind.

10. Lampe nach einem der vorstehenden Ansprüche, bei der die Anodenpaare (7ab, 103ab, 104ab, 108ab, 205, 225ab) zumindest außerhalb des Entladungsgefäßes (5, 202) zu einem gemeinsamen Anschluß (7c, 105, 106, 114, 115, 214) zusammengeführt sind.

11. Lampe nach Anspruch 9 und 10, bei der die Anoden (103, 104, 108, 109, 110, 205, 206) und die Kathoden (103, 104, 111, 203, 204) zumindest außerhalb des Entladungsgefäßes (5, 202) jeweils zu einem gemeinsamen Stromzuführungsbus (105, 106, 213, 214, 227) zusammengeführt sind.

12. Lampe nach einem der vorstehenden Ansprüche, bei der die streifenförmigen Anoden (205) in einem Randbereich des Entladungsgefäßes (5, 202) gegenüber einem Mittenbereich des Entladungsgefäßes verbreitet sind oder in der Umgebung einer Inhomogenität des Entladungsgefäßes verbreitert sind.

13. Lampe nach Anspruch 12, bei der die Verbreiterung der Anoden (205) asymmetrisch und dabei hauptsächlich oder ausschließlich zu der jeweils anderen Anode (205) des Paares hin ausgebildet ist.

14. Lampe nach einem der vorstehenden Ansprüche, bei der die Anoden (225) und die Kathoden (224) jeweils auf einer anderen Innenwand des Entladungsgefäßes in solcher Weise angeordnet sind, daß in Streifenrichtung gesehen gedachte Verbindungslinien zwischen einer Kathode und zwei nächst-benachbarten Anoden ein im wesentlichen symmetrisches V bilden.

15. Lampe nach einem der vorstehenden Ansprüche, bei der die Kathoden (111, 203, 204, 224) entlang ihrer Streifenlängsseiten Vorsprünge (113, 220, 226) zur örtlichen Festlegung einer Einzelentladungsstruktur aufweisen.

16. Lampe nach Anspruch 15, bei der die Vorsprünge (220) zur Erzielung einer homogenen Leuchtdichte der Lampe in einem Randbereich des Entladungsgefäßes (202) dichter liegen als in einem Mittenbereich des Entladungsgefäßes oder in der Umgebung einer Inhomogenität des Entladungsgefäßes dichter liegen.

17. Lampe nach einem der vorstehenden Ansprüche, bei der das Entladungsgefäß (202) plattenartig aufgebaut ist und eine Boden- (207) und eine Deckenplatte (208) aufweist, die im Vergleich zu ihrer Länge oder Breite in relativ geringem Abstand im wesentlichen parallel zueinander angeordnet sind, wobei zwischen der Boden- und der Deckenplatte Abstandshalter (250) angeordnet sind.

18. Lampe nach Anspruch 17, bei der die Abstandshalter (250) in einem Nächst-Nachbar-Abstand (251) voneinander angeordnet sind, dessen Produkt mit der Dicke der streifenförmigen Anoden (205, 206, 225) oder Kathoden (203, 204, 224) in dem Bereich von 5·10⁻⁸m² bis 6,8·10⁻⁷ m² , vorzugsweise über 1·10⁻⁷m² oder unter 5·10⁻⁷ m², liegt.

19. Lampe nach Anspruch 17 oder 18, bei der die Abstandshalter (250) in einem Nächst-Nachbar-Abstand (251) voneinander angeordnet sind, dessen Verhältnis zu der kleineren Dicke der Boden- (207) und der Deckenplatte (208) in dem Bereich von 8 bis 20, vorzugsweise über 10 oder unter 15, liegt.

20. Lampe nach einem der vorstehenden Ansprüche, bei der Elektroden (224-1, 224-2) auf oder in einer Innenwand einer transparenten Lichtabstrahlungsseite (208) der Lampe angebracht sind und diese Elektroden jeweils aufweisen einen ersten elektrisch gut leitfähigen Teil (224-1) und einen zweiten Teil (224-2) mit geringer Leitfähigkeit und größerer Breite als der erste Teil, wobei der zweite Teil in Lichtabstrahlungsrichtung (208) im wesentlichen transparent ist und bezüglich der Betriebsfrequenz der Lampe elektrisch leitend mit dem ersten Teil verbunden ist.

21. Lampe nach Anspruch 20, bei der die Elektroden (224-1, 224-2) an oder in der Innenwand der transparenten Lichtabstrahlungsseite (208) einen im wesentlichen rechteckigen Querschnitt aufweisen und der erste Teil (224-1) in der im wesentlichen rechteckigen Querschnittsform des zweiten Teils (224-2) enthalten ist.

22. Verfahren zur Herstellung einer Lampe nach einem der vorstehenden Ansprüche, zumindest Anspruch 6, bei dem zumindest die durch die Grenze (209) des Entladungsgefäßes (202) durchgeführten Elektroden (203-206) einschließlich des Durchführungsabschnitts (212) in einem gemeinsamen Strukturierungs- und Abscheidungsverfahren aufgebracht sind, vorzugsweise durch ein Dickschichtverfahren, etwa durch Siebdruck.

23. Beleuchtungssystem mit einer Lampe nach einem der Ansprüche 1-18 und einer elektrischen Impulsspannungsquelle (223), die dazu ausgelegt ist, die Lampe mit durch Pausen voneinander getrennten Spannungspulsen zu versorgen, wobei sich über die getrennten Spannungspulse hinweg ein kontinuierlicher Leuchtbetrieb der Lampe ergibt.

24. Flachbildschirmsystem mit einem flachen Bildschirm (235) zur Anzeige von Informationen und einer im wesentlichen parallel zu dem Flachbildschirm zur Hinterleuchtung desselben angeordneten Lampen nach einem der Ansprüche 1-18.

25. Flachbildschirmsystem nach Anspruch 24 mit einem Beleuchtungssystem nach Anspruch 23.

26. Flachbildschirmsystem nach Anspruch 24 oder 25, bei dem zwischen dem flachen Bildschirm (235) und der Lampe zumindest eine Lichtverstärkungsfolie (237, 238) angeordnet ist.

## Claims

1. Gas discharge lamp having a discharge vessel (5, 202) which is at least partially transparent and filled with a gas filling, a number of essentially strip-shaped anodes (A, 7, 103, 104, 108, 109, 110, 205, 206, 225) and cathodes (K, 6, 103, 104, 111, 203, 204, 224) which extend on walls of the discharge vessel and essentially parallel to one another, and a dielectric layer (10, 215, 228, 229) between at least the anodes and the gas filling for a dielectrically impeded discharge in the discharge vessel between neighbouring anodes and cathodes, **characterized in that** at least one anode pair (A, A', 7ab, 103ab, 104ab, 108ab, 205, 225ab) is arranged between two cathodes (K, 6, 103, 104, 111, 203, 204, 224) respectively adjacent to one anode of the pair.

2. Lamp according to Claim 1 as a flat radiator.

3. Lamp according to Claim 1 or 2, in which the discharge vessel (5, 202) consists of electrically nonconducting material.

4. Lamp according to one of the preceding claims, in which the spacing between the anodes of the pair (A, A', 7a, 7b, 103ab, 104ab, 108ab, 205, 225ab) from one another is smaller than the spacing between a respective anode of the pair and the cathode (K, 6, 103, 104, 111, 203, 204, 224) adjacent to it.

5. Lamp according to one of the preceding claims, in which the spacing of the anodes of the pair (A, A', 7a, 7b, 103ab, 104ab, 108ab, 205, 225ab) from one another is between 20% and 100% of the striking distance of the discharge.

6. Lamp according to one of the preceding claims, in which at least the anodes (A, 7, 103, 104, 108, 109, 110, 205, 206, 225) or the cathodes (K, 6, 103, 104, 111, 203, 204, 224) are applied to an inner wall of the discharge vessel (5, 202) and are guided in an extension of their strip shape directly through a boundary (209) of the discharge vessel which delimits the gas filling.

7. Lamp according to Claim 6, in which the discharge vessel (5, 202) has at least one plate (8, 207) which goes beyond the boundary (209) of the discharge vessel, and the anodes (A, 7, 103, 104, 108, 109, 110, 205, 206, 225) or cathodes (K, 6, 103, 104, 111, 203, 204, 224) are applied to the plate in such a way that they are guided on the plate through the discharge vessel at the boundary.

8. Lamp according to Claim 6 or 7, in which the strip shape of the anodes (A, 7, 103, 104, 108, 109, 110, 205, 206, 225) or cathodes (K, 6, 103, 104, 111, 203, 204, 224) has an essentially rectangular cross-section with a thickness in the range of 3-50 µm, preferably above 5 or 8 µm and with a width of 0.3-1.5 mm, preferably 0.5-1.2 mm.

9. Lamp according to Claim 6, 7 or 8, in which both the anodes (A, 7, 103, 104, 108, 109, 110, 205, 206, 225) and the cathodes (K, 6, 103, 104, 111, 203, 204, 224) are applied to the inner wall and are guided in an extension of their strip shape directly through the boundary (209) of the discharge vessel (5, 202).

10. Lamp according to one of the preceding claims, in which the anode pairs (7ab, 103ab, 104ab, 108ab, 205, 225ab) are combined at least outside the discharge vessel (5, 202) to form a common terminal (7c, 105, 106, 114, 115, 214).

11. Lamp according to Claims 9 and 10, in which the anodes (103, 104, 108, 109, 110, 205, 206) and the cathodes (103, 104, 111, 203, 204) are combined at least outside the discharge vessel (5, 202) to form in each case a common supply lead bus (105, 106, 213, 214, 227).

12. Lamp according to one of the preceding claims, in which the strip-shaped anodes (205) are widened in an edge region of the discharge vessel (5, 202) by comparison with a middle region of the discharge vessel or are widened in the surroundings of an inhomogeneity of the discharge vessel.

13. Lamp according to Claim 12, in which the widening of the anodes (205) is constructed asymmetrically, and in this case chiefly or exclusively with respect to the respective other anode (205) of the pair.

14. Lamp according to one of the preceding claims, in which the anodes (225) and the cathodes (224) are respectively arranged on another inner wall of the discharge vessel in such a way that, seen in the strip direction, imaginary connecting lines between a cathode and two nearest neighbouring anodes form a substantially symmetrical V.

15. Lamp according to one of the preceding claims, in which the cathodes (111, 203, 204, 224) have along their longitudinal strip sides projections (113, 220, 226) for spatially fixing an individual discharge structure.

16. Lamp according to Claim 15, in which for the purpose of achieving a homogeneous luminous density of the lamp, the projections (220) are situated more densely in an edge region of the discharge vessel (202) than in a middle region of the discharge vessel or in the surroundings of an inhomogeneity of the discharge vessel.

17. Lamp according to one of the preceding claims, in which the discharge vessel (202) is of plate-like design and has a base plate (207) and a top plate (208) which are arranged essentially parallel to one another at a relatively small spacing by comparison with their length or width, spacers (250) being arranged between the base and top plates.

18. Lamp according to Claim 17, in which the spacers (250) are arranged at a nearest neighbour spacing (251) from one another whose product with the thickness of the strip-shaped anodes (205, 206, 225) or cathodes (203, 204, 224) is in the range from 5 × 10⁻⁸ m² to 6.8 × 10⁷ m², preferably above 1 × 10⁻⁷ m² or below 5 × 10⁻⁷ m².

19. Lamp according to Claim 17 or 18, in which the spacers (250) are arranged at a nearest neighbour spacing (251) from one another whose ratio to the smaller thickness of the base plate (207) and of the top plate (208) is in the range from 8 to 20, preferably above 10 or below 15.

20. Lamp according to one of the preceding claims, in which the electrodes (224-1, 224-2) are mounted on or in an inner wall of a transparent light-emitting side (208) of the lamp, and these electrodes in each case have a first part (224-1) which is a good electric conductor, and a second part (224-2) of lesser conductivity and greater width than the first part, the second part being essentially transparent in the light-emitting direction (208) and being connected to the first part in a fashion which is electrically conducting with respect to the operating frequency of the lamp.

21. Lamp according to Claim 20, in which the electrodes (224-1, 224-2) have an essentially rectangular cross-section on or in the inner wall of the transparent light-emitting side (208), and the first part (224-1) is contained in the essentially rectangular cross-sectional shape of the second part (224-2).

22. Method for producing a lamp according to one of the preceding claims, at least Claim 6, in which at least the electrodes (203-206) guided through the boundary (209) of the discharge vessel (202) are applied, including the feedthrough section (212), using a joint structuring and depositing method, preferably by means of a thick-film method, for example by means of screen printing.

23. Lighting system having a lamp according to one of Claims 1-18 and an electrically pulsed voltage source (223) which is designed for the purpose of supplying the lamp with voltage pulses separated from one another by interpulse pauses, the result being a continuous lighting operation of the lamp stretching over the separate voltages pulses.

24. Flat screen system having a flat screen (235) for displaying information, and a lamp according to one of Claims 1-18 which is arranged essentially parallel to the flat screen in order to backlight the latter.

25. Flat screen system according to Claim 24 having a lighting system according to Claim 23.

26. Flat screen system according to Claim 24 or 25, in which at least one light amplifying film (237, 238) is arranged between the flat screen (235) and the lamp.

## Revendications

1. Lampe à décharge dans un gaz, comprenant une enceinte (5, 202) de décharge au moins en partie transparente et emplie d'une atmosphère gazeuse, un certain nombre d'anodes (A, 7, 103, 104, 108, 109, 110, 205, 206, 225) et de cathodes (K, 6, 103, 104, 111, 203, 204, 224), sensiblement en forme de bande qui s'étendent sur les parois de l'enceinte de décharge et en étant sensiblement parallèles entre elles, et une couche (10, 215, 228, 229) diélectrique entre au moins les anodes et l'atmosphère gazeuse pour avoir une décharge rendue incomplète par voie diélectrique dans l'enceinte de décharge entre des anodes et des cathodes voisines,
**caractérisée en ce qu'**au moins une paire (A, A', 7ab, 103ab, 104ab, 108ab, 205, 225ab) d'anodes est interposée entre deux cathodes (K, 6, 103, 104, 111, 203, 204, 224) voisines respectivement d'une anode de la paire.

2. Lampe suivant la revendication 1 sous la forme d'une source plate de rayonnement.

3. Lampe suivant la revendication 1 ou 2, dans laquelle l'enceinte (5, 202) de décharge est en un matériau non conducteur de l'électricité.

4. Lampe suivant l'une des revendications précédentes, dans laquelle la distance entre les anodes de la paire (A, A', 7ab, 103ab, 104ab, 108ab, 205, 225ab) est plus petite que la distance entre l'une des anodes de la paire et la cathode (K, 6, 103, 104,111,203,204,224> qui en est voisine.

5. Lampe suivant l'une des revendications précédentes, dans laquelle la distance entre les anodes de la paire (A, A', 7ab, 103ab, 104ab, 108ab, 205, 225ab) représente entre 20 % et 100 % de la distance de la décharge.

6. Lampe suivant l'une des revendications précédentes, dans laquelle au moins les anodes de la paire (A, 7, 103, 104, 108, 109, 110, 205, 206, 225) ou les cathodes (K, 6, 103, 104, 111, 203, 204, 224) sont déposées sur une paroi intérieure de l'enceinte (5, 202) de décharge et, par un prolongement de leur forme en bande, passent directement une limite (209) de l'enceinte de décharge, qui délimite l'atmosphère gazeuse.

7. Lampe suivant la revendication 6, dans laquelle l'enceinte (5, 202) de décharge a au moins une plaque (8, 207) qui va au-delà de la limite (209) de l'enceinte de décharge et les anodes (A, 7, 103, 104, 108, 109, 110, 205, 206, 225) ou les cathodes (K, 6, 103, 104, 111, 203, 204, 224) sont déposées sur la plaque, de sorte que sur la plaque elles traversent à la limite l'enceinte de décharge.

8. Lampe suivant la revendication 6 ou 7, dans laquelle les bandes des anodes (A, 7, 103, 104, 108, 109, 110, 205, 206, 225) ou des cathodes (K, 6, 103, 104, 111, 203, 204, 224) ont une section transversale sensiblement rectangulaire d'une épaisseur de l'ordre de 3 à 50 µm, de préférence de plus que 5 ou 8 µm et d'une largeur de 0,3 à 1,5 mm, de préférence de 0,5 à 1,2 mm.

9. Lampe suivant la revendication 6, 7 ou 8, dans laquelle tant les anodes (A, 7, 103, 104, 108, 109, 110, 205, 206, 225) que les cathodes (K, 6, 103, 104, 111, 203, 204, 224) sont déposées sur la paroi intérieure et par un prolongement de leur forme en bande, traversent directement la limite (209) de l'enceinte (5, 202) de décharge.

10. Lampe suivant l'une des revendications précédentes, dans laquelle les paires (7ab, 103ab, 104ab, 108ab, 205, 225ab) d'anodes sont rassemblées au moins à l'extérieur de l'enceinte (5, 202) de décharge en une borne (7c, 105, 106, 114, 115, 214) commune.

11. Lampe suivant la revendication 9 et 10, dans laquelle les anodes (103, 104, 108, 109, 110, 205, 206) et les cathodes (103, 104, 111, 203, 204) sont rassemblées au moins à l'extérieur de l'enceinte (5, 202) de décharge respectivement en un bus (105, 106, 213, 214, 227) commun d'entrée de courant.

12. Lampe suivant l'une des revendications précédentes, dans laquelle les anodes (205) en forme de bande sont élargies dans une partie marginale de l'enceinte (5, 202) de décharge par rapport à une partie médiane de l'enceinte de décharge ou sont élargies au voisinage d'une inhomogénéité de l'enceinte de décharge.

13. Lampe suivant la revendication 12, dans laquelle l'élargissement des anodes (205) est dissymétrique et va principalement ou exclusivement vers l'autre anode (205) de la paire.

14. Lampe suivant l'une des revendications précédentes, dans laquelle les anodes (225) et les cathodes (224) sont disposées respectivement sur une autre paroi intérieure de l'enceinte de décharge de façon à ce que des droites de liaison imaginaire, considérées dans la direction des bandes, entre une cathode et deux anodes immédiatement voisines forment un V sensiblement symétrique.

15. Lampe suivant l'une des revendications précédentes, dans laquelle les cathodes (111, 203, 204, 224) ont le long de leurs côtés longitudinaux de bande des saillies (113, 220, 226) de fixation localisée d'une structure individuelle de décharge.

16. Lampe suivant la revendication 15, dans laquelle les saillies (220) sont, pour obtenir une luminance homogène de la lampe, plus denses dans une partie marginale de l'enceinte (202) de décharge que dans une partie médiane de l'enceinte de décharge ou sont plus denses au voisinage d'une inhomogénéité de l'enceinte de décharge.

17. Lampe suivant l'une des revendications précédentes, dans laquelle l'enceinte (202) de décharge est constituée sous la forme d'une plaque et a une plaque (207) de fond et une plaque (208) de couvercle, qui sont disposées par rapport à leur longueur ou leur largeur à une distance relativement petite, sensiblement parallèlement l'une à l'autre, des entretoises (250) étant interposées entre la plaque de fond et la plaque de couvercle.

18. Lampe suivant la revendication 17, dans laquelle les entretoises (250) sont disposées à une distance (251) de la voisine la plus proche, dont le produit par l'épaisseur des anodes (205, 206, 225) ou des cathodes (203, 204, 224) en forme de bande est de l'ordre de 5· 10⁻⁸ m² à 6,8· 10⁻⁷ m² et de préférence supérieur à 1· 10⁻⁷ m²ou inférieur à 5· 10⁻⁷ m².

19. Lampe suivant la revendication 17 ou 18, dans laquelle les entretoises (250) sont disposées à une distance (251) de la voisine la plus proche, dont le rapport à l'épaisseur la plus petite de la plaque (207) de fond et de la plaque (208) de couvercle est compris entre 8 et 20 et de préférence est supérieur à 10 ou inférieur à 15.

20. Lampe suivant l'une des revendications précédentes, dans laquelle des électrodes (224-1, 224-2) sont appliquées sur la paroi intérieure ou dans la paroi intérieure d'un côté (208) transparent de la lampe émettant de la lumière et ces électrodes ont respectivement une première partie (224-1) bonne conductrice de l'électricité et une deuxième partie (224-2) ayant une conductivité plus petite et une largeur plus grande que la première partie, la deuxième partie étant sensiblement transparente dans la direction (208) d'émission de la lumière et étant reliée d'une manière conductrice de l'électricité à la première partie, pour ce qui concerne la fréquence de fonctionnement de la lampe.

21. Lampe suivant la revendication 20, dans laquelle les électrodes (224-1, 224-2) sur la paroi intérieure ou dans la paroi intérieure du côté (208) transparent d'émission de la lumière ont une section transversale sensiblement rectangulaire et la première partie (224-1) est contenue dans la forme de la section transversale sensiblement rectangulaire de la deuxième partie (224-2).

22. Procédé de fabrication d'une lampe suivant l'une des revendications précédentes, au moins suivant la revendication 6, dans lequel on dépose au moins les électrodes traversant la limite (209) de l'enceinte (202) de décharge, y compris de la partie (212) de traversée, suivant un procédé commun de structuration et de dépôt, de préférence par un procédé en couche épaisse, par exemple par sérigraphie.

23. Système d'éclairage comprenant une lampe suivant l'une des revendications 1 à 18 et une source (223) électrique de tension pulsée, qui est conçue pour alimenter la lampe par des impulsions de tension séparées l'une de l'autre par des intervalles, un fonctionnement éclairant continu de la lampe étant obtenu par delà les impulsions séparées de tension.

24. Système d'écran plat ayant un écran (235) plat d'affichage d'informations et une lampe, suivant l'une des revendications 1 à 18, disposée sensiblement parallèlement à l'écran pour l'éclairer par l'arrière.

25. Système d'écran plat suivant la revendication 24, comprenant un système d'éclairage suivant la revendication 23.

26. Système d'écran plat suivant la revendication 24 ou 25, dans lequel il est interposé entre l'écran (235) plat et la lampe au moins une feuille (237, 238) d'intensification de la lumière.
